# EUROPÄISCHE PATENTSCHRIFT

(11) **EP 3 172 067 B1**
(45) Veröffentlichungstag und Bekanntmachung des Hinweises auf die Patenterteilung: **28.11.2018**
(21) Anmeldenummer: 15748204.3
(22) Anmeldetag: 27.07.2015
(51) Int. Cl.: B60C 23/04

(54) **VERFAHREN FÜR DIE KONFIGURIERUNG EINES REIFENDRUCKSENSORS**
METHOD FOR CONFIGURATING A TIRE PRESSURE SENSOR DEVICE
METHODE POUR CONFIGURER UN DISPOSITIF DE PRESSION DE PNEUMATIQUE

(30) Priorität: 25.07.2014 DE 102014110566
(43) Veröffentlichungstag der Anmeldung: 31.05.2017
(73) Patentinhaber: Huf Hülsbeck & Fürst GmbH & Co. KG, 42551 Velbert (DE)
(72) Erfinder: TOMAKIDI, Thomas, 42551 Velbert (DE)
(74) Vertreter: Bals, Rüdiger
(86) Internationale Anmeldenummer: PCT/EP2015/067121
(87) Internationale Veröffentlichungsnummer: WO 2016/012627

(56) Entgegenhaltungen:
- EP-A2- 1 172 237
- WO-A1-2013/152294
- DE-A1-102011 051 805
- GB-A- 2 500 697

## Beschreibung

Die vorliegende Erfindung betrifft ein Verfahren für die Konfigurierung eines Reifendrucksensors sowie ein Computerprogrammprodukt zur Ausführung eines solchen Verfahrens auf einer Mobilfunkvorrichtung.

Derartige Verfahren sind im Allgemeinen bekannt, indem Reifendrucksensoren auf Fahrzeuge konfiguriert werden. Reifendrucksensoren sind dafür da, den Innendruck in einem Rad innerhalb des Reifens zu ermitteln. Dieser Reifendruck kann anschließend über eine Funkschnittstelle an das Steuergerät des Fahrzeugs übermittelt werden. Damit wird ein Sicherheitsvorteil erzielt, da das Fahrzeug und auf diese Weise auch der Fahrer des Fahrzeugs immer eine Information über den Reifendruck in dem jeweiligen Rad besitzt. Damit kann ein langsames bzw. schleichendes Verlieren von Reifendruck rechtzeitig erkannt und auf diese Weise eine Information an den Fahrer des Fahrzeugs zur Verfügung gestellt werden.

Nachteilhaft bei den bekannten Lösungen ist es, dass die Anpassung der Reifendrucksensoren an das jeweilige Fahrzeug mit hohem Aufwand verbunden ist. So ist insbesondere die Kommunikation in Form eines Kommunikationsprotokolls zwischen dem jeweiligen Reifendrucksensor und dem Steuergerät des jeweiligen Fahrzeugs abhängig von dem Fahrzeugtyp bzw. dem Fahrzeughersteller. Auch andere Parameter, wie z. B. Messbereiche, Auslösegrenzen oder das tatsächliche Signalformat des Reifendrucksensors, sind fahrzeugspezifisch bzw. fahrzeugtypspezifisch. Dementsprechend werden bisher zwei unterschiedliche Formen von Reifendrucksensoren angeboten. Dies sind zum einen fahrzeugspezifische Reifendrucksensoren, welche von Werk aus auf das jeweilige Fahrzeug konfiguriert sind. Für Werkstätten bedeutet dies, dass solche spezifischen Reifendrucksensoren für alle in der Werkstatt vorkommenden Fahrzeugtypen gelagert werden müssen. Damit entsteht ein hoher Lagerhaltungsaufwand mit dem entsprechenden Platzbedarf, der entsprechenden Logistik und den zugehörigen Kosten. Gleichzeitig werden auch sogenannte Universalsensoren als Reifendrucksensoren angeboten. Diese sind grundsätzlich in jedem Fahrzeug bzw. Fahrzeugtyp einsetzbar, müssen jedoch auf das jeweilige Fahrzeug hinsichtlich der Sensorparameter konfiguriert werden. Die Konfiguration bezieht sich dabei auf die entsprechende Anpassung der zugehörigen Sensorparameter auf das Fahrzeug bzw. den Fahrzeugtyp. Dies erfolgt mit hohem Aufwand bei der Montage der Reifen auf der Felge, nämlich durch separate Programmiergeräte, die wiederum spezifisch für den jeweiligen Universalsensortyp sind. Mit anderen Worten bedeutet dies, dass nun zwar eine Werkstatt eine definierte Menge von Universalreifendrucksensoren vorhalten kann, jedoch für die unterschiedlichen Universalreifendrucksensoren die vom jeweiligen Hersteller zur Verfügung gestellten Programmiergeräte besitzen muss. Neben dem hohen Kostenaufwand und der Lagerhaltung führt dies beim Reifenhändler bzw. bei der Werkstatt zu hoher Komplexität. Gleichzeitig ist für den Monteur der Räder auch eine hohe Komplexität durch die Variation unterschiedlichster Programmiergeräte vorhanden. Aus dem Stand der Technik sind insbesondere zwei Dokumente DE 10 2011 051 805 A1 und GB 2500697 A bekannt, wobei ein Smartphone im Rahmen eines wiederkonfigurierbaren Reifendrucküberwachungssystems eingesetzt wird, aber dies ohne direkte Verbindung zum Radmodul. Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise die Konfiguration eines Reifendrucksensors auf ein Fahrzeug zu verbessern, bevorzugt die notwendige Zeit für die Konfigurierung zu reduzieren.
Die voranstehende Aufgabe wird gelöst durch ein Verfahren mit den Merkmalen des Anspruchs 1 sowie ein Computerprogrammprodukt mit den Merkmalen des Anspruchs 12.

Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogrammprodukt und jeweils umgekehrt, so dass bezüglich der Offenbarung zu den einzelnen Erfindungsaspekten stets wechselseitig Bezug genommen wird bzw. werden kann.

Bei einem erfindungsgemäßen Verfahren für die Konfigurierung eines Reifendrucksensors auf ein Fahrzeug werden die folgenden Schritte durchgeführt:
- Herstellen einer Datenkommunikationsverbindung zwischen einer Mobilfunkvorrichtung und dem Reifendrucksensor,
- Auswählen wenigstens eines für das Fahrzeug spezifischen Sensorparameters mittels der Mobilfunkvorrichtung,
- Aktivieren des wenigstens einen ausgewählten Sensorparameters im Reifendrucksensor.

Ein erfindungsgemäßes Verfahren dient also zur grundsätzlich bekannten Konfigurierung des Reifendrucksensors auf ein Fahrzeug. Dabei bezieht sich diese Konfigurierung auf wenigstens einen für das jeweilige Fahrzeug spezifischen Sensorparameter. Ein solcher Sensorparameter kann, wie bereits beschrieben, ein entsprechendes Kommunikationsformat für das zugehörige spezifische Steuergerät des Fahrzeugs sein. Auch andere Sensorparameter können alternativ oder zusätzlich für die Konfigurierung verwendet werden. Bspw. kann es sich um die Messbereiche des Reifendrucksensors oder entsprechende Auslösegrenzen handeln. Auch das Format des übermittelten Signals kann fahrzeugspezifisch durch eine Konfigurierung mit einem erfindungsgemäßen Verfahren anpassbar sein.

Ein entscheidender Schritt der vorliegenden Erfindung ist es, dass bei dem Verfahren eine Datenkommunikationsverbindung zwischen dem Reifendrucksensor und einer Mobilfunkvorrichtung hergestellt wird. Unter einer Mobilfunkvorrichtung ist im Sinne der vorliegenden Erfindung eine Vorrichtung zu verstehen, welche gerade keine spezifische Programmiervorrichtung für den Reifendrucksensor darstellt. Vielmehr ist eine Mobilfunkvorrichtung jede Vorrichtung, welche als Primärfunktion dem Mobilfunk oder einer ähnlichen Nutzung dient. Insbesondere ist also unter einer Mobilfunkvorrichtung ein Mobiltelefon oder ein sogenannter Tablet-PC zu verstehen. Eine primäre Funktion einer Mobilfunkvorrichtung ist also insbesondere eine weiterführende Nutzung insbesondere eine private oder geschäftliche Nutzung dieser Vorrichtung durch den entsprechenden Nutzer. Mit anderen Worten wird ein erfindungsgemäßes Verfahren durch eine Datenkommunikation zwischen einem Reifendrucksensor und einer Mobilfunkvorrichtung als sekundäre oder weiter nachgeordnete Funktion der Mobilfunkvorrichtung zur Verfügung gestellt.

Durch die Verwendung einer Mobilfunkvorrichtung und deren Sekundärfunktion wird erfindungsgemäß die Nutzung spezifischer Programmiergeräte umgangen bzw. kann auf deren Nutzung verzichtet werden. Dies führt in erster Linie zu einem großen Kostenvorteil sowie einem großen Komplexitätsvorteil. So kann durch die Ausführung eines erfindungsgemäßen Verfahrens auf einer Mobilfunkvorrichtung, z. B. als Softwareprodukt, Computerprogrammprodukt bzw. als sogenannte installierbare App, auf der Mobilfunkvorrichtung nun die komplette Konfigurierungsfunktionalität zur Verfügung gestellt werden. Damit sind die Kosten und die Komplexität für separate und spezifische Programmiergeräte vermeidbar.

Ein weiterer Vorteil wird durch die Mobilfunkvorrichtung dahingehend erzielt, dass üblicherweise die Nutzer solcher Mobilfunkvorrichtungen durch die starke Nutzung der Primärfunktion eine sichere Umgangsqualität mit dieser Vorrichtung besitzen. Somit wird das erfindungsgemäße Verfahren auf Basis dieser sicheren Umgangsqualität durchgeführt, was wiederum zum einen die Sicherheit beim Umgang mit der Konfiguration und vor allem die Geschwindigkeit bei der Konfiguration unterstützt. Da üblicherweise Reifendrucksensoren mit hoher Geschwindigkeit konfiguriert werden müssen, um entsprechend hohen Durchsatz in der Werkstatt zu erzielen, sind hier auch geringe Geschwindigkeitsverbesserungen im Minutenbereich von entscheidender und vor allem wirtschaftlicher Bedeutung.

Unter dem Auswählen eines spezifischen Sensorparameters ist dabei in erfindungsgemäßer Weise, eine Korrelation eines Sensorparameters mit einem typischen bzw. spezifischen Fahrzeug zu verstehen. So kann bspw. ein aktives Eingeben oder ein Auswählen aus einer Liste eine spezifische Korrelation aus einer Vielzahl möglicher Sensorparameter mit einem spezifischen Fahrzeug erfolgen. Diese Auswahl erfolgt vorzugsweise auf einer Anzeigevorrichtung der Mobilfunkvorrichtung, z. B. auf einem sogenannten Touchscreen.

Die Aktivierung des wenigstens einen ausgewählten Sensorparameters im Reifendrucksensor bezieht sich dabei auf das Konfigurierungsergebnis. Mit anderen Worten kann nun dieser Sensorparameter der Funktion des Reifendrucksensors durch die Aktivierung zugewiesen werden, so dass im Einsatz der Reifendrucksensor diesen ausgewählten Sensorparameter hinsichtlich der zugehörigen Funktionsweise verwendet. Ist bspw. als spezifischer Sensorparameter ein fahrzeugtypspezifisches bzw. fahrzeugherstellerspezifisches Sendeprotokoll ausgewählt worden, so erfolgt die Aktivierung dahingehend, dass der Sensorparameter von nun an mit diesem ausgewählten Kommunikationsprotokoll mit der Steuervorrichtung des Fahrzeugs kommuniziert.

Selbstverständlich kann die Auswahl und die Aktivierung hinsichtlich des tatsächlichen Speicherortes des Sensorparameters sowohl in der Mobilfunkvorrichtung als auch im Reifendrucksensor erfolgen. Auch eine Kommunikation aus diesen beiden Speicherorten ist im Sinne der vorliegenden Erfindung denkbar. Weist der Reifendrucksensor einen relativ großen Speicherplatz auf, so können sämtliche möglichen Sensorparameter dort gespeichert werden. Das Auswählen und Aktivieren erfolgt auf diese Weise sozusagen durch die Bildschirmfunktion der Mobilfunkvorrichtung, so dass z. B. ein sogenannter Tag auf den spezifischen und ausgewählten Sensorparameter gesetzt wird. Ist im Gegensatz dazu zumindest ein Teil der möglichen Sensorparameter in der Mobilfunkvorrichtung gespeichert, so kann die Aktivierung zusätzlich ein Übermitteln des ausgewählten Sensorparameters über die Datenkommunikationsverbindung sowie ein entsprechendes Speichern in der ausführbaren Speichereinheit im Reifendrucksensor beinhalten.

Das erfindungsgemäße Verfahren ist dabei nicht auf die Konfigurierung eines einzigen Reifendrucksensors begrenzt. Vielmehr können auch zwei oder mehr, insbesondere wie es später noch erläutert wird alle Reifendrucksensoren eines Fahrzeugs gemeinsam dieses Konfigurationsverfahren durchlaufen. Durch die Durchführung eines einzigen Verfahrens für die Konfiguration von zwei oder mehr Reifendrucksensoren wird dementsprechend ein noch größerer Zeitvorteil erzielt. Dabei ist darauf zu achten, dass die entsprechende Datenkommunikationsverbindung eine ausreichende Reichweite hat, um sämtliche Reifendrucksensoren innerhalb dieser Reichweite entsprechend zu konfigurieren.

Ein Reifendrucksensor kann dabei für ein erfindungsgemäßes Verfahren die unterschiedlichsten Bauformen aufweisen. So ist bspw. ein Reifendrucksensor mit integriertem Ventil als Ziel eines erfindungsgemäßen Konfigurierungsverfahrens denkbar. Selbstverständlich sind auch separate Reifendrucksensoren, welche z. B. auf der Innenseite einer Felge angebracht sind, ebenfalls im Rahmen der vorliegenden Erfindung denkbar.

Es kann von Vorteil sein, wenn bei einem erfindungsgemäßen Verfahren die Datenkommunikationsverbindung als kabellose Verbindung, insbesondere auf Basis wenigstens einer der folgenden Funkstandards, aufgebaut wird:
- WLAN
- Bluetooth
- NFC (Near Field Communication)
- LF-Kommunikation

Bei der voranstehenden Aufzählung handelt es sich um eine nicht abschließende Liste. Insbesondere werden dabei Funkstandards verwendet, welche grundsätzlich auch von dem Reifendrucksensor für seine Kommunikation mit dem jeweiligen Steuergerät des Fahrzeugs verwendet werden. Dabei wird eine Reduktion der Komplexität der Reifendrucksensoren möglich. Gleichzeitig kann auch eine Anwendung auf bereits bestehende Reifendrucksensoren für ein erfindungsgemäßes Verfahren durchgeführt werden. Damit vereinfacht sich das Verfahren weiter und bringt vor allem die erfindungsgemäßen Vorteile für eine größere Anzahl von möglichen Reifendrucksensoren zum Einsatz. Je nach Reichweite der kabellosen Verbindung, insbesondere bei der Verwendung von WLAN oder Bluetooth, ist es möglich, einen örtlichen Kontakt zum Reifen und insbesondere auch die örtliche Nähe zum Reifen zu vermeiden. Bevorzugt können diese größeren Reichweiten dazu führen, dass auch zwei oder mehr Reifendrucksensoren gleichzeitig an einem Fahrzeug und damit mit paralleler Durchführung und dem entsprechenden Zeitgewinn konfiguriert werden. Wird hinsichtlich einer Reichweite der Datenkommunikationsverbindung diese deutlich begrenzt, wie dies z. B. beim NFC-Funkstandard der Fall ist, wird damit die Sicherheit gegen einen unerwünschten Eingriff in die Konfigurierung von außen verbessert.

Ein weiterer Vorteil der Funkverbindung ist es, dass ein vollständiger Verzicht auf die Einschränkung durch mechanische Schnittstellen erfolgen kann. Durch die Verwendung einer LF-Kommunikation, also einer sogenannten Low Frequency Kommunikation, kann das Verfahren einfacher und kostengünstiger eingesetzt werden. So sind auf diese Weise kleinere, leichtere und vor allem kostengünstigere Kommunikationsschnittstellen an der Mobilfunkvorrichtung und/oder an dem Reifendrucksensor möglich. Auch der notwendige Energiebedarf für die Durchführung der Verfahrensschritte und insbesondere die Ausführung der Datenkommunikationsverbindung wird deutlich reduziert.

Vorteilhaft ist es ebenfalls, wenn bei einem erfindungsgemäßen Verfahren die Datenkommunikationsverbindung in direkter Weise mit dem Reifendrucksensor hergestellt wird. Mit anderen Worten erfolgt eine direkte Kommunikation zwischen der Mobilfunkvorrichtung und der zugehörigen Funkschnittstelle mit dem Reifendrucksensor und dessen Funkschnittstelle. Dies ermöglicht es, das Fahrzeug bzw. den zugehörigen Reifen zu konfigurieren, ohne dass eine zusätzliche dazwischengeschaltete Kommunikationshilfsvorrichtung vorhanden ist. Hinsichtlich des Ortes und vor allem auch des Zeitpunktes der Durchführung des erfindungsgemäßen Verfahrens besteht damit eine größere Freiheit. Auch kann bereits beim montierten Reifen an einem Fahrzeug die Konfigurierung durchgeführt werden, ohne dass sich das Steuergerät des Fahrzeugs in einem aktivierten Modus befindet.

Alternativ oder zusätzlich ist es auch denkbar, dass bei einem erfindungsgemäßen Verfahren die Datenkommunikationsverbindung in direkter Weise über ein Steuergerät des Fahrzeugs hergestellt wird. Damit kann der Aufwand für die Kommunikation deutlich reduziert werden. So kann insbesondere auf die Kommunikationsverbindung und dem entsprechenden Kommunikationsstandard zwischen dem Steuergerät des Fahrzeugs und den Reifendrucksensoren zurückgegriffen werden. Ein Vorteil dieser Ausführungsform ist es, dass damit auf jeden Fall sämtliche bereits am Fahrzeug montierten Reifen gleichzeitig und damit mit paralleler Zeitgewinnmöglichkeit konfiguriert werden können. Ein weiterer Vorteil ist eine definierte einzelne Schnittstelle für diese parallele Konfiguration für die Mobilfunkvorrichtung. Nicht zuletzt kann auf diese Weise der Schnittstellenaufwand bei den jeweiligen Reifendrucksensoren nochmals reduziert werden und insbesondere ein erfindungsgemäßes Verfahren bereits für bestehende Reifendrucksensoren einsetzbar werden. Ein weiterer Vorteil dieser Ausführungsform ist es, dass bei dem Fahrzeug die Zündung eingeschaltet sein muss, um das Steuergerät in einen entsprechenden Kommunikationsmodus zu versetzen. Dies vermeidet insbesondere das Risiko des Missbrauchs bei einem erfindungsgemäßen Verfahren. Weiter ist die Rechenperipherie des Steuergeräts einsetzbar, wodurch sich der technische Aufwand für den jeweiligen Reifendrucksensor bzw. das technische Anforderungsprofil an die Mobilfunkvorrichtung reduziert.

Vorteilhaft ist es ebenfalls, wenn bei einem erfindungsgemäßen Verfahren die Auswahl des wenigstens einen für das Fahrzeug spezifischen Sensorparameters aus einer Speichereinheit des Reifendrucksensors, insbesondere aus vordefinierten Sensorparametern erfolgt. Eine Speichereinheit in einem Reifendrucksensor kann dementsprechend auch in einer universalen Ausbildung dieses Reifendrucksensors unterschiedliche mögliche Sensorparameter eingespeichert haben. Auch kann hier bereits eine Korrelation zu entsprechenden Fahrzeugen oder Fahrzeugtypen gespeichert sein. Bei dieser Ausführungsform agiert die Mobilfunkvorrichtung sozusagen nur als erweitertes Display, wobei die tatsächlichen Lese- und Schreib- bzw. Aktiviervorgänge innerhalb der Speichereinheit des Reifendrucksensors erfolgen. Dies führt dazu, dass mit größter Sicherheit der Reifendrucksensor die für ihn richtigen Sensorparameter bereits ab Werk gespeichert hat und nur noch aus diesen mit 100%iger Sicherheit ein spezifischer Sensorparameter über die Mobilfunkvorrichtung ausgewählt wird. Auch ein Einspeichern solcher Sensorparameter über eine separate App oder im Rahmen des vorliegenden Verfahrens ist im Sinne der vorliegenden Erfindung denkbar. Diese Möglichkeit bringt es mit sich, dass für die Konfigurationsübermittlung, also die notwendige Dauer für eine Übertragung über die Datenkommunikationsverbindung, eine Reduktion des Datenvolumens und damit eine Reduktion der Sendezeit möglich wird. Selbstverständlich kann diese Ausführungsform unter Verwendung einer Speichereinheit auch mit anderen Speicherorten, wie sie in den nachfolgenden Absätzen erläutert werden, kombiniert werden.

So ist es denkbar, dass bei einem erfindungsgemäßen Verfahren die Auswahl des wenigstens einen für das Fahrzeug spezifischen Sensorparameters aus einer Datenbank erfolgt, in welcher der jeweilige spezifische Sensorparameter, insbesondere in Korrelation zu dem jeweiligen Fahrzeug gespeichert ist. Das bedeutet, dass eine solche Datenbank sämtliche oder eine Vielzahl möglicher Sensorparameter enthält, so dass die Auswahl des spezifischen Sensorparameters aus dieser Vielzahl damit in unterstützter Weise erfolgen kann. Auch eine Assistenzfunktion kann in der Mobilfunkvorrichtung als Teil des erfindungsgemäßen Verfahrens ausgebildet sein, so dass eine Fehlkorrelation durch die entsprechende Korrelationsinformation in der Datenbank zwischen dem spezifischen Sensorparameter und dem Fahrzeug ausgeschlossen werden kann. Selbstverständlich können auch zwei oder mehr Sensorparameter als spezifische Sensorparameter in der Datenbank gruppiert gespeichert sein, so dass die Auswahl einer solchen Sensorparametergruppe erfolgen kann, wie dies später noch näher erläutert wird. Eine solche Datenbank ist insbesondere in der Mobilfunkvorrichtung gespeichert. Dabei kann ein Teil eines erfindungsgemäßen Verfahrens beinhalten, dass zusätzlich und vor der Durchführung der beschriebenen Verfahrensschritte ein Abgleich der Datenbank mit einem Datenbankserver durchgeführt wird. So kann sichergestellt sein, dass die Datenbank in der Mobilfunkvorrichtung die aktuellste Version aufweist, und auf diese Weise sichergestellt wird, dass auch bei einer Veränderung der Korrelationszusammenhänge in der Datenbank nach Auslieferung des Reifendrucksensors, dieser mit der jeweils aktuellsten spezifischen Sensorparameterauswahl konfiguriert werden kann.

Ein weiterer Vorteil kann es sein, wenn bei einem erfindungsgemäßen Verfahren die Auswahl von wenigstens zwei für das Fahrzeug spezifischen Sensorparametern gemeinsam erfolgt über eine Auswahl des Fahrzeugs, insbesondere aus einer Fahrzeug-Datenbank. Darunter ist zu verstehen, dass in der Fahrzeug-Datenbank für jedes Fahrzeug sämtliche zur Konfigurierung, insbesondere zur vollständigen Konfigurierung, notwendigen Sensorparameter in einer jeweiligen Fahrzeuggruppe gespeichert sind. Mit anderen Worten kann die Auswahl nun einer Sensorparametergruppe und damit einer Fahrzeuggruppe erfolgen, so dass durch einen einzigen Auswahlschritt sämtliche zu konfigurierenden Sensorparameter ausgewählt und anschließend in einem einzigen Schritt aktivierbar sind. Auch dies reduziert den notwendigen Zeitaufwand und bringt damit deutliche wirtschaftliche Vorteile mit sich.

Vorteilhaft ist es ebenfalls, wenn bei einem erfindungsgemäßen Verfahren die Verfahrensschritte des Herstellens der Datenkommunikationsverbindung, der Auswahl des wenigstens einen Sensorparameters und der Aktivierung des wenigstens einen ausgewählten Sensorparameters nach der Montage des Reifendrucksensors auf einer Reifenfelge erfolgt. Damit wird eine Fehlprogrammierung des Reifendrucksensors mit hoher Wahrscheinlichkeit vermieden. Insbesondere kann eine Konfigurierung stattfinden, wenn bereits alle Reifen auf der Felge mit den entsprechenden Reifendrucksensoren versehen worden sind und bereits die Felgen an dem Fahrzeug montiert sind. Dies führt insbesondere unter der Verwendung der bereits erläuterten indirekten Kommunikation über ein Steuergerät im Fahrzeug zu einer deutlichen Komforterhöhung und Sicherheitsverbesserung.

Vorteilhaft ist es weiter, wenn bei einem erfindungsgemäßen Verfahren die Datenkommunikationsverbindung zwischen der Mobilfunkvorrichtung und wenigstens zwei Reifendrucksensoren unterschiedlicher Räder eines Fahrzeugs, insbesondere mit allen Reifendrucksensoren aller Räder des Fahrzeugs, hergestellt wird, für eine gemeinsame Konfiguration dieser Reifendrucksensoren. Damit wird die bereits mehrfach beschriebene Reduktion des Zeitaufwands möglich, da eine parallele Konfigurierung von zwei oder mehr Reifendrucksensoren erfolgt. Damit ist es darüber hinaus möglich, eine sogenannte Duplizierung eines entsprechenden Protokolls bzw. eines Pakets für einen Reifendrucksensor für alle Reifendrucksensoren zur Verfügung zu stellen, so dass auch die entsprechende Sicherheit verbessert wird. Um die Reifendrucksensoren parallel auszuwählen, kann insbesondere eine Codierung der Reifendrucksensoren durchgeführt werden. Insbesondere ist diese Auswahl der Codierung automatisiert, wie dies im nachfolgenden Schritt erläutert wird. Neben der Möglichkeit, dass sämtliche Reifendrucksensoren in der Reichweite dem erfindungsgemäßen Konfigurierungsverfahren unterzogen werden, ist es vorteilhaft, wenn ein Reifendrucksensor für dieses Verfahren durch Scannen einer Codierung, insbesondere mittels einer Scanvorrichtung der Mobilfunkvorrichtung, ausgewählt wird. Mit anderen Worten handelt es sich dabei um eine spezifische und bewusst durchgeführte Kopplung bei der Herstellung der Datenkommunikationsverbindung. So sind Mobilfunkvorrichtungen häufig für weitere Nutzungsfunktionen mit Kamerasystemen ausgestattet. Diese erlauben es üblicherweise, einen Barcode in Form eines Strichcodes oder eines sogenannten QR-Codes zu erkennen. Selbstverständlich sind auch Scanvorrichtungen in Form der sogenannten NFC-Kommunikation oder anderer Nahfeldkommunikationsmöglichkeiten denkbar. Durch das Scannen der Codierung kann dementsprechend einfach und schnell eine Kopplung zwischen der Mobilfunkvorrichtung und dem jeweiligen Reifendrucksensor erfolgen und damit das erfindungsgemäße Verfahren schneller und sicherer und vor allem einfacher gestartet werden.

Ein weiterer Vorteil ist erzielbar, wenn bei einem erfindungsgemäßen Verfahren die Datenkommunikationsverbindung zwischen einer LF-Schnittstelle der Mobilfunkvorrichtung und einer LF-Gegenschnittstelle des Reifendrucksensors ausgebildet wird, wobei die Datenkommunikationsverbindung insbesondere in einem Frequenzbereich zwischen 100kHz und 140kHz, vorzugsweise in einem Frequenzbereich zwischen 120kHz und 135kHz ausgeführt wird. Auf diese Weise kann eine deutliche Reduktion der notwendigen Energie für die Durchführung der Datenkommunikation erreicht werden. Weiter können durch die Verwendung entsprechender Frequenzbereiche für die Datenkommunikation die Größe, das Gewicht und auch die Kosten der LF-Schnittstelle und/oder der LF-Gegenschnittstelle reduziert werden. Dabei kann insbesondere die LF-Gegenschnittstelle sowohl passiv, als auch aktiv ausgebildet sein. Für eine Ausführungsform der Mobilfunkvorrichtung in Form eines Mobiltelefons oder Tablet-PCs ist eine separate strukturelle Ausbildung der LF-Schnittstelle denkbar, welche datenkommunizierend mit dem Prozessor einer solchen Mobilfunkvorrichtung verbunden ist. So ist auch ein Nachrüsten bereits vorhandener Mobilfunkvorrichtungen möglich.

Selbstverständlich ist es im Rahmen der vorliegenden Erfindung auch denkbar, dass die LF-Schnittstelle und/oder die LF-Gegenschnittstelle als Teil einer Kontrolleinheit, insbesondere eines Kontrollchips, z. B. in Form eines Mikrochips, ausgebildet sind. Dies bringt eine weitere Reduktion der Baugröße und des Gewichts mit sich. Auch der Energiebedarf lässt sich auf diese Weise für die Durchführung eines erfindungsgemäßen Verfahrens noch weiter senken.

Ebenfalls Gegenstand der vorliegenden Erfindung ist ein Computerprogrammprodukt zur Ausführung auf einer Mobilfunkvorrichtung und gespeichert auf einem computerlesbaren Medium, aufweisend:
- computerlesbare Programmmittel, welche die Recheneinheit veranlassen, eine Datenkommunikationsverbindung zwischen einer Mobilfunkvorrichtung und dem Reifendrucksensor herzustellen,
- computerlesbare Programmmittel, welche die Recheneinheit veranlassen, wenigstens einen für das Fahrzeug spezifischen Sensorparameter mittels der Mobilfunkvorrichtung auszuwählen,
- computerlesbare Programmmittel, welche die Recheneinheit veranlassen, den wenigstens einen ausgewählten Sensorparameter im Reifendrucksensor zu aktivieren.

Vorzugsweise sind computerlesbare Programmmittel vorgesehen für die Ausführung der Schritte eines erfindungsgemäßen Verfahrens. Damit bringt ein erfindungsgemäßes Computerprogrammprodukt die gleichen Vorteile mit sich, wie sie ausführlich mit Bezug auf ein erfindungsgemäßes Verfahren erläutert worden sind.

Ebenfalls Gegenstand der vorliegenden Erfindung ist ein System aus einer Mobilfunkvorrichtung und wenigstens einem Reifendrucksensor, welche in einer Datenkommunikationsverbindung gekoppelt sind bzw. stehen und für die Durchführung eines erfindungsgemäßen Verfahrens ausgebildet sind.

Ebenfalls ist Gegenstand der vorliegenden Erfindung ein Verfahren zum Anpassen einer Reifendruckkontrolleinrichtung, welche zum Anbringen an ein Rad eines mit Luftreifen versehenen Fahrzeugs eingerichtet ist, an einen Fahrzeugtyp.

Eine solche Reifendruckkontrolleinrichtung kann im Inneren des Luftreifens am Luftreifen selbst, an der Felge oder am Ventil angebracht sein. Außerhalb des Luftreifens kann die Reifendruckkontrolleinrichtung am Ventil angebracht sein. Die Reifendruckkontrolleinrichtung, häufig auch als Radelektronik bezeichnet, hat eine Einrichtung zum Bestimmen des im Luftreifen herrschenden Luftdrucks, auch als Reifendruck bezeichnet, und/oder zum Bestimmen einer Änderung des Reifendrucks. Die Reifendruckkontrolleinrichtung kann darüber hinaus noch eine oder mehrere Einrichtungen zum Messen anderer Zustandsgrößen als den Reifendruck aufweisen, insbesondere einen Temperatursensor zum Messen der Temperatur der Reifendruckkontrolleinrichtung und/oder einen oder zwei Beschleunigungssensoren, mit denen der Bewegungszustand des Reifens ermittelt werden kann. Eine elektrische Schaltung, welche üblicherweise einen ASIC, einen Mikroprozessor oder einen Mikrocontroller enthält, dient zur Steuerung der Reifendruckkontrolleinrichtung und zur Verarbeitung der gewonnenen Messergebnisse. Ein Programm für die Schaltung ist in einem digitalen Speicher gespeichert, welcher der Schaltung zugeordnet ist oder Bestandteil der Schaltung ist. Im Sinne der vorliegenden Erfindung kann die als Reifendruckkontrolleinrichtung beschriebene Vorrichtung auch als Reifendrucksensor bezeichnet werden. Mit anderen Worten kann ein Reifendrucksensor als Reifendruckkontrolleinrichtung ausgebildet sein oder zumindest einen Teil einer Reifendruckkontrolleinrichtung ausbilden.

Die Reifendruckkontrolleinrichtung ist mit einem Sender ausgerüstet, der in einem "ersten" Frequenzbereich arbeitet. Bekannte Reifendruckkontrolleinrichtungen haben einen Sender, der im 315 MHz-Bereich oder im 433 MHz-Bereich arbeitet. Dieser Sender überträgt Daten aus der Reifendruckkontrolleinrichtung an einen außerhalb der Reifendruckkontrolleinrichtung liegenden Empfänger. Ein weiterer Empfänger ist in der Reifendruckkontrolleinrichtung selbst vorgesehen; er ist dazu eingerichtet, Daten von einem außerhalb der Reifendruckkontrolleinrichtung liegenden zweiten Sender zu empfangen, welcher in einem "zweiten" Frequenzbereich arbeitet, welcher vom ersten Frequenzbereich verschieden ist. Es ist bekannt, einen solchen zweiten Sender zu benutzen, um die Reifendruckkontrolleinrichtung zu triggern, damit sie einen Messvorgang und/oder einen Sendevorgang durchführt.

Die Reifendruckkontrolleinrichtung hat ferner eine Stromquelle für ihre Stromversorgung. Die Stromquelle kann eine langlebige Batterie sein. Die Stromquelle kann aber auch z. B. ein piezoelektrischer Generator sein, der auf Verformungen, Erschütterungen oder Beschleunigungen des Luftreifens reagiert, mittels des Piezoeffekts eine elektrische Spannung erzeugt und einen elektrischen Kondensator auflädt, aus welchem wiederholt der Strom für wenigstens einen Mess- und Sendevorgang entnommen werden kann. Ein solcher piezoelektrischer Generator ist z. B. aus der DE 603 10 204 T2 bekannt.

Es ist weiterhin bekannt, dass Fahrzeughersteller festlegen, wie eine für einen bestimmten Fahrzeugtyp vorgesehene Reifendruckkontrolleinrichtung zu arbeiten hat. Demgemäß ist die für einen ausgewählten Fahrzeugtyp bestimmte Reifendruckkontrolleinrichtung an diesen Fahrzeugtyp angepasst, um die Vorgaben des Fahrzeugherstellers zu erfüllen. Die Vorgaben variieren von Fahrzeughersteller zu Fahrzeughersteller und innerhalb der von einem Fahrzeughersteller angebotenen Fahrzeugmodelle zum Teil auch von Modell zu Modell. Für unterschiedliche Fahrzeugtypen sind deshalb zahlreiche unterschiedliche Reifendruckkontrolleinrichtungen auf dem Markt und müssen auf dem Aftermarket verfügbar sein und von Händlern bzw. Werkstätten vorrätig gehalten werden.

Auf dem Aftermarket sind bereits universell verwendbare, frei programmierbare Reifendruckkontrolleinrichtungen bekannt. Sie müssen in einer Automobilwerkstatt, in einer Reifenwerkstatt oder von einem Ersatzteilhändler mit einer für den jeweiligen Fahrzeugtyp spezifischen Software programmiert werden. Dies ist sehr aufwendig, da die Software entweder über das Internet heruntergeladen oder von einer Service-CD geladen und mit dieser Software die Reifendruckkontrolleinrichtung komplett neu programmiert werden muss. Die dazu erforderliche Übertragung von Programmcodes und Daten, welche die Software ausmachen, in den Speicher der Reifendruckkontrolleinrichtung geschieht üblicherweise drahtlos über einen LF-Kanal mit einer Frequenz von 125 kHz (LF bedeutet Low Frequency). Zu diesem Zweck enthalten bekannte "universelle" Reifendruckkontrolleinrichtungen, wie sie in der US 7,518,497 B2 beschrieben sind, einen Empfänger für 125 kHz-Signale.

Die Automobilwerkstatt oder Reifenwerkstatt, die eine universelle Reifendruckkontrolleinrichtung an einem Fahrzeug installieren will, benötigt dafür einen Zugang zum Internet bzw. einen Computer mit einer Programmierstation, um die gesamte Software in die Reifendruckkontrolleinrichtung zu übertragen. Der Umfang der zu übertragenden Programmcodes und Daten beträgt typisch einige 10 Kilobytes. Die Programmierung ist nicht nur zeitaufwendig, sondern auch störanfällig.

Diesem Gegenstand der vorliegenden Erfindung liegt u. a. die optionale Aufgabe zugrunde, die Verwendung von Reifendruckkontrolleinrichtungen zu erleichtern und zu verbilligen.

Diese Aufgabe wird durch ein Verfahren gemäß der nachfolgenden Beschreibung gelöst.

Erfindungsgemäß wird eine Reifendruckkontrolleinrichtung der eingangs genannten Art dadurch an einen bestimmten Fahrzeugtyp angepasst, dass in dem Speicher der Reifendruckkontrolleinrichtung zunächst eine Basisversion des Programms gespeichert wird, aus welcher mehrere unterschiedliche Vollversionen des Programms entwickelt werden können, um damit die Reifendruckkontrolleinrichtung auszustatten, welche für unterschiedliche Fahrzeugtypen unterschiedliche technische Anforderungen erfüllen müssen, die z. B. vom Fahrzeughersteller vorgegeben sind. Mit dieser Basisversion des Programms können die Reifendruckkontrolleinrichtungen in den Handel kommen. Erst danach, wenn feststeht, für welchen Fahrzeugtyp eine solche Reifendruckkontrolleinrichtung verwendet werden soll, werden für diesen ausgewählten Fahrzeugtyp bestimmte Programmparameter im Speicher der Reifendruckkontrolleinrichtung gespeichert und verändern die ursprünglich gespeicherte Basisversion des Programms in eine an den ausgewählten Fahrzeugtyp angepasste Vollversion des Programms.

Das hat wesentliche Vorteile:
- Die Anpassung der Basisversion des Programms an den ausgewählten Fahrzeugtyp, für welchen die Reifendruckkontrolleinrichtung schließlich verwendet werden soll, lässt sich viel einfacher und schneller durchführen als eine bisher erforderliche komplette Programmierung der Reifendruckkontrolleinrichtung mit einer für den ausgewählten Fahrzeugtyp spezifischen Software.
- Für das Anpassen der Basisversion des Programms an den ausgewählten Fahrzeugtyp müssen der Händler auf dem Aftermarket und die Werkstatt, welche die Anpassung vornehmen soll, keine aufwendigen Geräte bereithalten. Es genügt ein handgroßes Gerät, mit welchem digitale Befehlssignale drahtlos oder leitungsgebunden in die Reifendruckkontrolleinrichtung übertragen werden können. Weil nur einige Programmparameter übertragen werden müssen, ist das Befehlssignal recht kurz. Seine Länge beträgt typisch nur zwischen 10 Byte und 30 Byte.
- Das Anpassen der Basisversion des Programms durch Laden von Programmparametern, welche für den ausgewählten Fahrzeugtyp spezifisch sind, lässt sich schnell durchführen.
- Das Anpassen der Basisversion des Programms durch Laden von Programmparametern, welche für den ausgewählten Fahrzeugtyp spezifisch sind, ist nicht anfällig für Fehler oder Störungen.
- Der größte Markt für Reifendruckkontrolleinrichtungen besteht in den USA, weil dort Reifendruckkontrollsysteme für Neufahrzeuge gesetzlich vorgeschrieben sind. Das erfindungsgemäße Verfahren hat den Vorteil, dass mit seiner Hilfe eine Reifendruckkontrolleinrichtung mit einer erfindungsgemäß veränderbaren Basisversion des Programms als Ersatz für rund 80 % der auf dem amerikanischen Markt vorhandenen, für den jeweiligen Fahrzeugtyp spezifischen Reifendruckkontrolleinrichtungen verwendet werden kann.
- Die Befehlssignale, mit denen die Programmparameter zur Anpassung der Basisversion des Programms geladen werden, lassen sich mit handelsüblichen Geräten wie z. B. dem TECH400SD übertragen, die heute bereits zur Analyse von Reifendruckkontrollsystemen am Markt sind und digitale Befehlssignale mit einer Frequenz von 125 kHz übertragen können.
- Die Basisversion des Programms benötigt viel weniger Speicherplatz als das in der US 7,518,495 B2 beschriebene Speichern von zahlreichen Komplettversionen von Programmen für die in Frage kommenden Fahrzeugtypen.

Bei den Programmparametern handelt es sich um bestimmte Werte, auf welche Variable eines Programms oder eines Unterprogramms eingestellt werden können. Mit ihnen lässt sich ein Programm anpassen und/oder flexibilisieren und/oder die Architektur eines Programms oder einer Software modifizieren.

Die Programmparameter können leitungsgebunden in den Speicher der Reifendruckkontrolleinrichtung übertragen werden. Das ist selbst bei Reifendruckkontrolleinrichtungen möglich, deren Schaltung mit einem Gießharz vergossen ist, denn z. B. kann das Gießharz mit elektrischen Kontaktnadeln durchstoßen werden, welche auf in oder unter dem Gießharz liegende Anschlusskontakte treffen. Um das zu erleichtern, können die Stellen der Oberfläche des Gießharzes, die durchstoßen werden sollen, markiert sein.

Vorzugsweise werden die Programmparameter drahtlos an einen in der Reifendruckkontrolleinrichtung vorgesehenen Empfänger übertragen. Die Übertragung erfolgt insbesondere mittels Funksignalen in einem "zweiten" Frequenzbereich an den "zweiten" Empfänger in der Reifendruckkontrolleinrichtung. Dafür genügt ein handgroßes Gerät mit einem Sender, bei dem es sich um den "zweiten" Sender im Sinne des Patentanspruchs 3 handelt, welcher in dem "zweiten" Frequenzbereich arbeitet. Dieser zweite Sender überträgt die Befehlssignale an den in der ausgewählten Reifendruckkontrolleinrichtung vorgesehenen zweiten Empfänger, welcher mit dem dort vorgesehenen Speicher und der dort vorgesehenen Schaltung zusammenarbeitet, von welcher wenigstens ein Teil digital arbeitet. Solche Geräte, die digitale Befehlssignale drahtlos an eine Reifendruckkontrolleinrichtung übertragen können, sind dem Fachmann bekannt. Ein Beispiel ist das "TPMS Diagnostic and Programming Tool TECH400SD" der Firma Bartec USA LLC in 44213 Phoenix Drive, Sterling Heights, Michigan 48314, USA.

Der zweite Sender, der die Befehlssignale mit den Programmparametern übertragen soll, arbeitet deshalb zweckmäßigerweise bei einer niedrigeren Frequenz als der erste Sender, insbesondere im Frequenzbereich von 50 kHz bis 300 kHz, vorzugsweise bei 125 kHz, weil die Reichweite dieser LF-Signale kürzer ist als die Reichweite der Signale, welche mit einer Frequenz von 315 MHz oder 433 MHz aus der Reifendruckkontrolleinrichtung heraus an einen außen liegenden, im Fahrzeug vorgesehenen Empfänger übertragen werden. Die geringere Reichweite ist kein Nachteil, denn das nur handgroße Gerät für die Übertragung der Programmparameter kann man der Reifendruckkontrolleinrichtung ohne weiteres dicht annähern. Die geringere Reichweite hat den Vorteil, dass die Programmparameter tatsächlich nur von der nächstliegenden Reifendruckkontrolleinrichtung wirksam empfangen und gespeichert werden, während weiter entfernt liegende Reifendruckkontrolleinrichtungen nicht gestört werden.

Da man bei der Herstellung patentgemäßer Reifendruckkontrolleinrichtungen noch nicht weiß, für welche Fahrzeugtypen sie einmal verwendet werden sollen, werden in der Basisversion des Programms die Programmparameter vorzugsweise lediglich mit vorläufigen Zahlenwerten gespeichert. Die vorläufig gespeicherten Zahlenwerte können im Prinzip beliebig gewählt werden. Sie müssen für keinen Fahrzeugtyp eine Überwachung des Reifendrucks ermöglichen. Vorzugsweise werden jedoch in der Reifendruckkontrolleinrichtung ab Werk solche Zahlenwerte der Programmparameter vorläufig gespeichert, die für wenigstens einen der vielen in Frage kommenden Fahrzeugtypen eine Überwachung des Reifendrucks ermöglichen. Vorzugsweise wählt man dafür einen häufig verwendeten Fahrzeugtyp aus. Wenn es mehrere Fahrzeugtypen gibt, bei welchen die Reifendruckkontrolleinrichtung mit denselben Programmparametern arbeiten kann, können auch diese Programmparameter als vorläufige Programmparameter ab Werk gespeichert werden.

Beim Aftermarkethändler oder in einer Automobilwerkstatt oder in einer Reifenwerkstatt werden die in der Basisversion des Programms gespeicherten vorläufigen Programmparameter geändert, um die Reifendruckkontrolleinrichtung an einen bestimmten Fahrzeugtyp anzupassen. Dazu werden die vorläufig gespeicherten Programmparameter vorzugsweise mit den nachträglich übertragenen, für den ausgewählten Fahrzeugtyp bestimmten Programmparametern überschrieben. In dem Zusammenhang können die in der Basisversion des Programms gespeicherten Programmparameter zunächst auf andere Speicherplätze kopiert und dadurch gesichert werden, bevor die nachträglich übertragenen, für den ausgewählten Fahrzeugtyp bestimmten Programmparameter gespeichert werden. Die Sicherung der ursprünglich gespeicherten Programmparameter ermöglicht es, die Reifendruckkontrolleinrichtung nach Bedarf wieder in ihren Ausgangszustand zurückzusetzen.

Als Programmparameter, welche von Fahrzeugtyp zu Fahrzeugtyp variieren können und deshalb in einer erfindungsgemäßen Reifendruckkontrolleinrichtung in einer Basisversion des Programms angelegt und nachträglich geändert werden können, kommen insbesondere die folgenden Parameter in Frage:
- Warnschwellen für eine unzureichende Stromversorgung. Eine ausreichende Stromversorgung ist für eine einwandfreie Funktion der Reifendruckkontrolleinrichtung unerlässlich. Es ist deshalb wichtig, dass dann, wenn die Spannung und/oder der Ladezustand einer in der Reifendruckkontrolleinrichtung vorgesehenen Batterie unter einen vorgegebenen Grenzwert absinken, oder wenn der Ladzustand eines Kondensators, welcher durch einen piezoelektrischen Generator während der Fahrt wieder aufgeladen werden soll, wiederholt unter einen unteren Grenzwert absinkt oder wenn Sendevorgänge wegen unzureichender Stromversorgung nicht, nicht zum vorgesehenen Zeitpunkt oder nicht vollständig durchgeführt werden, ist eine Meldung an den Fahrer wichtig, damit er Abhilfe schaffen kann und nicht darauf vertraut, dass die Reifendruckkontrolleinrichtung fehlerfrei funktioniert.
- Programmparameter, die den Aufbau eines von der Reifendruckkontrolleinrichtung zu sendenden Datentelegramms festlegen. Je nach Fahrzeughersteller hat ein solches Datentelegramm unterschiedliche Inhalte, z. B. ausgewählt aus der Gruppe Druck, Druckdifferenz, Temperatur, Ladezustand der Batterie, Bewegungszustand des Rades, eine Kennung, welche die Reifendruckkontrolleinrichtung individualisiert, die Form einer Präambel, welche das Datentelegramm einleitet, und die Reihenfolge, in welcher die zu übertragenden Daten im Telegramm enthalten sind. So könnte ein Automobilhersteller vorschreiben, dass z. B. an erster Stelle nach der Präambel ein Drucksignal, an zweiter Stelle ein Druckdifferenzsignal, an dritter Stelle ein Temperaturwert, an vierter Stelle die Kennung, an fünfter Stelle der Ladezustand einer Batterie und an sechster Stelle eine Information steht, ob das Rad ruht oder sich dreht. Dies alles kann durch Programmparameter festgelegt werden, welche für den betreffenden Fahrzeugtyp spezifisch sind.
- Programmparameter, welche die Übertragungsgeschwindigkeit des "ersten" Senders festlegen, das ist der Sender, welcher sich in der Reifendruckkontrolleinrichtung befindet. Da die Übertragungsgeschwindigkeit, welche im Allgemeinen in Baud angegeben wird, von Sender und Empfänger übereinstimmen muss und der Empfänger im Fahrzeug vorgegeben ist, muss die Übertragungsgeschwindigkeit des Senders in der Reifendruckkontrolleinrichtung an die Übertragungsgeschwindigkeit angepasst werden, für welche der externe Empfänger ausgelegt ist. Die Anpassung kann durch einen entsprechenden Programmparameter bestimmt werden.
- Programmparameter, welche die Modulationsart des Senders in der Reifendruckkontrolleinrichtung festlegen. Auch die Modulationsart des Senders, Frequenzmodulation oder Amplitudenmodulation, muss auf den im Fahrzeug vorhandenen Empfänger abgestimmt sein, welcher für eine bestimmte Modulationsart ausgelegt ist, und kann durch einen Programmparameter festgelegt werden.
- Programmparameter, welche Zeitintervalle zwischen Messvorgängen und Zeitintervalle zwischen Sendevorgängen festlegen. Derartige Zeitintervalle sind normalerweise vom Fahrzeughersteller vorgegeben und müssen unter Umständen an die Funktionsweise des im Fahrzeug vorgesehenen Empfangsgerätes angepasst sein. Die Zeitintervalle können fest vorgegeben sein, sie können aber auch abhängig vom gemessenen Druck, von einem Druckabfall oder abhängig von der Geschwindigkeit des Fahrzeugs festgelegt sein. So ist es bekannt, die Häufigkeit von Druckmessvorgängen und von Sendevorgängen mit zunehmender Geschwindigkeit des Fahrzeugs zu steigern, wobei die Sendevorgänge nicht notwendigerweise genauso häufig erfolgen wie die Druckmessvorgänge. Es ist weiterhin bekannt, bei Überschreiten einer vorgegebenen Reifendruck-Abfallgeschwindigkeit die Druckmessrate und die Senderate zu erhöhen, um möglichst rasch Klarheit darüber zu erhalten, ob wirklich ein kritischer Druckabfall oder nur eine Fehlmessung vorliegt. Entsprechendes kann beim Überschreiten einer vorgegebenen Drucksteigerungsgeschwindigkeit vorgesehen werden. Unter welchen Umständen oder wann das geschehen soll, kann im Programm durch einen Programmparameter festgelegt werden.
- Ein Programmparameter, welcher den Typ der Codierung der von der Reifendruckkontrolleinrichtung zu sendenden Datentelegramme festlegt. Reifendruckkontrolleinrichtungen verwenden üblicherweise eine Manchester-Codierung. Von dieser gibt es unterschiedliche Typen, von denen der passende Typ durch Übertragen eines entsprechenden Programmparameters festgelegt werden kann.
- Programmparameter, welche festlegen, welche Zustände die Reifendruckkontrolleinrichtung einnehmen darf, welche Übergänge zwischen diesen Zuständen erlaubt sind und unter welchen Bedingungen sie erfolgen. Solche Zustände können z. B. diese sein:
   ▪ Ein Ruhezustand, in welchem das Fahrzeug länger als eine vorgegebene Zeitspanne steht. Diese Zeitspanne kann durch einen Programmparameter bestimmt werden. Es kann auch vorgegeben werden, ob im Ruhezustand Druckmessungen stattfinden und wenn ja, in welchen Zeitabständen, und ob Sendevorgänge stattfinden sollen, und wenn ja, in welchen Zeitabständen.
   ▪ Ein anderer Zustand ist der Normalzustand bei bewegtem Fahrzeug. Für diesen Zustand kann z. B. festgelegt werden, ab welcher Drehzahl des Rades, die von einem Beschleunigungssensor in der Reifendruckkontrolleinrichtung gemessen werden kann, der Übergang vom Ruhezustand in den normalen Bewegungszustand erfolgt. In diesem kann festgelegt werden, in welchen Zeitabständen normalerweise Druck und Temperatur gemessen werden, z. B. in Zeitabständen von 3 Sekunden, und in welchen Zeitabständen Sendevorgänge erfolgen sollen, z. B. in Zeitabständen von 60 Sekunden.
   ▪Ein dritter Zustand kann der schnelle Sendemodus sein. In ihm wird die Reifendruckkontrolleinrichtung überführt, wenn der Reifendruck eine untere Schwelle unterschreitet oder wenn die Druckabfallgeschwindigkeit eine obere Schwelle überschreitet. Für den schnellen Sendemodus kann durch Programmparameter festgelegt werden, wie häufig in diesem Modus Messvorgänge und Sendevorgänge erfolgen, z. B. beide in Zeitabständen von 1 Sekunde.
   ▪ Ein Programmparameter, welcher die Frequenz festlegt, auf welcher der in der Reifendruckkontrolleinrichtung vorhandene Sender senden soll. Die Reifendruckkontrolleinrichtung kann z. B. darauf eingerichtet sein, wahlweise im Frequenzbereich von 433 MHz, welcher in Deutschland üblich ist, oder im Frequenzbereich von 315 MHz, welcher in den USA üblich ist, zu senden. Die Auswahl kann durch Eingeben eines entsprechenden Programmparameters getroffen werden.

Reifendruckkontrolleinrichtungen haben regelmäßig eine individuelle Kennung, welche sie als Bestandteil des Datentelegramms an den Empfänger im Fahrzeug übermitteln, damit dort festgestellt werden kann, von welchem Rad des Fahrzeugs das übertragene Datentelegramm stammt. In vorteilhafter Weiterbildung der Erfindung kann eine Kennung, die bereits in der Basisversion des Programms einer Reifendruckkontrolleinrichtung gespeichert wurde, nachträglich geändert werden. Das macht es möglich, in Fällen, in denen an einer bestimmten Radposition eines Fahrzeugs eine Reifendruckkontrolleinrichtung durch eine andere Reifendruckkontrolleinrichtung ersetzt wird, sei es, weil die bisherige Reifendruckkontrolleinrichtung defekt ist oder weil z. B .ein Sommerreifen gegen einen Winterreifen getauscht wird, die Kennung der bisherigen Reifendruckkontrolleinrichtung abzufragen und in die neue Reifendruckkontrolleinrichtung zu übertragen, welche an derselben Radposition an die Stelle der alten Reifendruckkontrolleinrichtung treten soll. Das hat den Vorteil, dass das zentrale Empfangsgerät im Fahrzeug im Falle eines solchen Austauschs keine neue Kennung lernen muss, sondern nach dem Austausch der Reifendruckkontrolleinrichtung sofort wieder voll funktionsfähig ist. Das Abfragen und Anzeigen der Kennung der zu ersetzenden Reifendruckkontrolleinrichtung kann z. B. mit dem Gerät TECH400SD erfolgen.

Für das Übertragen der Programmparameter, die für einen bestimmten Fahrzeugtyp bestimmt sind, verwendet man vorzugsweise ein drahtlos arbeitendes Übertragungsgerät, welches digitale Befehlssignale übermittelt und mit LF-Codes arbeitet, welche die digitale Schaltung in der Reifendruckkontrolleinrichtung zu interpretieren vermag. Ein geeignetes Übertragungsgerät ist z. B. das bereits erwähnte TECH400SD. Auf diesem Übertragungsgerät kann für die in Frage kommenden unterschiedlichen Fahrzeugtypen z. B. ein Menü installiert werden, vorzugsweise ein Pulldown-Menü, welches für eine Anzahl von Fahrzeugtypen die erforderlichen Programmparameter enthält, vorzugsweise jeweils unter der Typenbezeichnung des betreffenden Fahrzeugs abgelegt, so dass durch Eingeben der Typenbezeichnung die zugehörigen Programmparameter abgerufen werden können. Das Menü kann entweder vom Hersteller des Übertragungsgeräts vorinstalliert sein oder aus dem Internet auf das Übertragungsgerät heruntergeladen werden oder von einer CD-ROM oder von einem anderen Datenträger in das Übertragungsgerät eingelesen werden, welche vom Hersteller des Übertragungsgeräts oder vom Hersteller der erfindungsgemäßen Reifendruckkontrolleinrichtung mitgeliefert werden kann. Das Gerät TECH400SD hat bspw. einen Schlitz, in welchen eine sichere digitale Speicherkarte (SD Card) gesteckt werden kann, um Software-Updates zu ermöglichen. Auf diese Weise kann auch ein solches Pulldown-Menü geladen werden. Um die Übertragung der erforderlichen Programmparameter vorzunehmen, muss dann lediglich der passende Satz von Programmparametern, welcher durch die Typenangabe des Fahrzeugs bezeichnet sein kann, aufgerufen und die Übertragung in den Speicher der Reifendruckkontrolleinrichtung gestartet werden. Die Übertragung ist in Sekundenschnelle abgeschlossen. Danach können die übertragenen Programmparameter gegen weitere Änderungen gesichert werden, insbesondere durch ein willkürlich ausgelöstes Befehlssignal.

Anstatt mit einem Übertragungsgerät wie dem TECH400SD können die Programmparameter auch mit einem Mobiltelefon, insbesondere mit einem Smartphone, übertragen werden, wenn dieses mit einer Schnittstelle ausgestattet ist, über welche Daten mit Funksignalen in dem zweiten Frequenzbereich übertragen werden können.

Ein System aus einem solchen Übertragungsgerät mit einem Menü zum Auswählen eines Satzes von Programmparametern, welche zu einem ausgewählten Fahrzeugtyp gehören, und mit einem oder mehreren Reifendruckkontrolleinrichtungen der eingangs genannten Art, in welche ein ausgewählter Satz von Programmparametern zu übertragen ist, ist im Rahmen der vorliegenden Erfindung ebenfalls denkbar.

Die Programmparameter können leitungsgebunden in den Speicher der Reifendruckkontrolleinrichtung übertragen werden. Bei Reifendruckkontrolleinrichtungen, deren Schaltung mit einem Gießharz vergossen ist, kann zu diesem Zweck das Gießharz an besonders markierten Stellen seiner Oberfläche mit elektrischen Kontaktnadeln durchstoßen werden, welche auf Anschlusskontakte treffen, die unter den markierten Stellen liegen.

Besser ist es, die Programmparameter drahtlos an einen in der jeweiligen Reifendruckkontrolleinrichtung liegenden zweiten Empfänger zu senden, welcher dazu eingerichtet ist, Daten von einem außerhalb der Reifendruckkontrolleinrichtung liegenden Sender zu empfangen, der in einem zweiten Frequenzbereich arbeitet. In diesem Fall weist das Übertragungsgerät den in dem zweiten Frequenzbereich sendenden zweiten Sender auf.

Bei dem Übertragungsgerät muss es sich nicht um ein spezialisiertes Gerät wie das TECH400SD handeln. Es ist ein Vorteil der vorliegenden Erfindung, dass das Übertragungsgerät auch ein Mobiltelefon sein kann, insbesondere ein Smartphone. Mobiltelefone, die eine Schnittstelle für die Ausgabe von Daten haben, sind bereits bekannt. In dem erfindungsgemäßen System wird deshalb mit Vorteil ein Mobiltelefon eingesetzt, welches seine Schnittstelle für die Ausgabe von Daten hat, zu denen die zu übertragenden Programmparameter gehören. Damit die Übertragung drahtlos erfolgen kann, ist eine Baugruppe vorgesehen, die als ein gesondertes Modul ausgebildet sein kann und an die Schnittstelle des Mobiltelefons anschließbar ist. Vorzugsweise kann das Modul mit dem Mobiltelefon fest, z. B. steckbar, verbunden werden, so dass das Mobiltelefon und das Modul wie eine Einheit gehandhabt werden können. Diese Baugruppe enthält den in dem zweiten Frequenzbereich arbeitenden Sender sowie eine Steuereinrichtung, welche die über die Schnittstelle ausgegebenen Programmparameter empfängt und den Sender der Baugruppe so steuert, dass dieser die Programmparameter an den zweiten Empfänger in der Reifendruckkontrolleinrichtung überträgt. Der in der Baugruppe vorgesehene Sender ist mit seiner Sendefrequenz auf den Frequenzbereich abgestimmt, in welchem der in der Reifendruckkontrolleinrichtung vorgesehene zweite Empfänger empfangen kann, insbesondere auf 125 KHz.

Üblicherweise ist in der Reifendruckkontrolleinrichtung ein Speicher zusammen mit der Einrichtung zum Messen des Reifendrucks in einen integrierten Schaltkreis, z. B. in einen anwendungsspezifischen integrierten Schaltkreis (ASIC), in einen Microcontroller oder in einen Microprozessor, integriert. Der integrierte Schaltkreis kann weitere Sensoren enthalten, z. B. einen Beschleunigungssensor und/oder einen Temperatursensor. Er kann darüber hinaus Aufgaben zur Auswertung oder Vorauswertung der gewonnenen Messwerte und zur Steuerung der Reifendruckkontrolleinrichtung übernehmen.

Bei den bekannten Reifendruckkontrolleinrichtungen ist der Speicher nicht groß genug, um eine allen auf dem Markt befindlichen Reifendruckkontrollsystemen genügende Basissoftware aufzunehmen. In vorteilhafter Weiterbildung der Erfindung ist deshalb vorgesehen, in der Reifendruckkontrolleinrichtung außerhalb des integrierten Schaltkreises einen gesonderten Zusatzspeicher vorzusehen, insbesondere einen EPROM. Zwischen dem integrierten Schaltkreis mit seinem Speicher auf der einen Seite und dem Zusatzspeicher auf der anderen Seite soll eine Leitungsverbindung bestehen, über welche eine Kommunikation zwischen dem integrierten Schaltkreis und seinem Speicher auf der einen Seite und dem Zusatzspeicher auf der anderen Seite möglich ist. Die Basissoftware kann dann teils im Speicher des integrierten Schaltkreises und teils im Zusatzspeicher gespeichert sein. Der Zusatzspeicher kann so dimensioniert sein, dass er eine Basissoftware aufnehmen kann, die einer größeren Anzahl von Reifendruckkontrollsystemen genügt als dies allein mit dem im integrierten Schaltkreis verfügbaren Speicher möglich wäre. Der Zusatzspeicher wird bevorzugt so bemessen, dass er eine Basissoftware aufnehmen kann, die allen oder fast allen am Markt befindlichen Reifendruckkontrollsystemen genügt.

Die Kommunikation zwischen dem im integrierten Schaltkreis vorgesehenen Speicher und dem Zusatzspeicher erfolgt vorzugsweise verschlüsselt. Damit kann verhindert werden, dass über die Leitungsverbindung zwischen dem integrierten Schaltkreis und dem Zusatzspeicher Daten abgefangen und bisher unbekannte Betriebssoftware der Reifendruckkontrolleinrichtung analysiert werden kann.

Ein weiterer Gegenstand der Erfindung ist ein Verfahren zum Anpassen einer Reifendruckkontrolleinrichtung an einen Fahrzeugtyp, wobei die Reifendruckkontrolleinrichtung zum Anbringen an ein Rad eines mit Luftreifen versehenen Fahrzeugs eingerichtet ist und eine Einrichtung zum Messen des im Luftreifen herrschenden Luftdrucks (Reifendruck) oder einer Änderung des Reifendrucks, ggf. noch eine oder mehrere Einrichtungen zum Messen anderer Messgrößen als den Reifendruck, eine elektrische Schaltung, von welcher wenigstens ein Teil digital arbeitet, zum Steuern der Reifendruckkontrolleinrichtung und ggf. zum Verarbeiten der von den Messeinrichtungen gelieferten Messwerte, einen Speicher, in welchem ein Programm für die Schaltung gespeichert ist, eine elektrische Stromquelle für die Stromversorgung der Reifendruckkontrolleinrichtung, und einen in einem ersten Frequenzbereich arbeitenden ersten Sender zum Übertragen von Daten aus der Reifendruckkontrolleinrichtung an einen außerhalb der Reifendruckkontrolleinrichtung liegenden ersten Empfänger hat, dadurch gekennzeichnet, dass in dem Speicher zunächst eine Basisversion des Programms gespeichert wird; aus welcher mehrere unterschiedliche Versionen des Programms für mehrere Fahrzeugtypen entwickelt werden können, und dass für einen ausgewählten Fahrzeugtyp eine passende Vollversion dadurch erzeugt wird, dass für den ausgewählten Fahrzeugtyp bestimmte Programmparameter nachträglich im Speicher der Reifendruckkontrolleinrichtung gespeichert werden.

Ein erfindungsgemäßes Verfahren lässt sich dahingehend weiterbilden, dass die Reifendruckkontrolleinrichtung einen Eingang hat, über welchen die Programmparameter leitungsgebunden in den Speicher übertragen werden.

Ein erfindungsgemäßes Verfahren lässt sich dahingehend weiterbilden, dass ein zweiter Empfänger in der Reifendruckkontrolleinrichtung vorgesehen ist, welcher dazu eingerichtet ist, Daten von einem außerhalb der Reifendruckkontrolleinrichtung, in einem zweiten Frequenzbereich arbeitenden zweiten Sender zu empfangen, und dass die Programmparameter mittels Funksignalen in dem zweiten Frequenzbereich an den zweiten Empfänger, übertragen werden.

Ein erfindungsgemäßes Verfahren lässt sich weiterbilden, durch die Verwendung eines zweiten Senders, der bei einer niedrigeren Frequenz als der erste Sender arbeitet.

Ein erfindungsgemäßes Verfahren lässt sich weiterbilden, durch die Verwendung eines zweiten Senders, der bei einer Frequenz im Bereich von 50kHz bis 300kHz, vorzugsweise bei 125 kHz arbeitet.

Ein erfindungsgemäßes Verfahren lässt sich dahingehend weiterbilden, dass die Programmparameter mit einem Mobiltelefon, insbesondere mit einem Smartphone, in den Speicher der Reifendruckkontrolleinrichtung übertragen werden, welches mit einer Schnittstelle ausgestattet ist, über welche Funksignale in dem zweiten Frequenzbereich gesendet werden können.

Ein erfindungsgemäßes Verfahren lässt sich weiterbilden, durch die Verwendung einer Basisversion des Programms, in welcher Programmparameter mit vorläufigen Zahlenwerten gespeichert sind.

Ein erfindungsgemäßes Verfahren lässt sich dahingehend weiterbilden, dass die vorläufigen gespeicherten Zahlenwerte der Programmparameter so gewählt werden, dass sie für wenigstens einen Fahrzeugtyp eine Überwachung des Reifendrucks ermöglichen.

Ein erfindungsgemäßes Verfahren lässt sich dahingehend weiterbilden, dass die in der Basisversion des Programms gespeicherten vorläufigen Programmparameter im Speicher mit den nachträglich übertragenen für den ausgewählten Fahrzeugtyp bestimmten Programmparameter überschrieben werden.

Ein erfindungsgemäßes Verfahren lässt sich dahingehend weiterbilden, dass die in der Basisversion des Programms gespeicherten Programmparameter auf andere Speicherplätze kopiert und dadurch gesichert werden, bevor die nachträglich übertragenen, für den ausgewählten Fahrzeugtyp bestimmten Programmparameter gespeichert werden.

Ein erfindungsgemäßes Verfahren lässt sich dahingehend weiterbilden, dass ein oder mehrere Programmparameter aus der folgenden Gruppe von Programmparametern im Speicher der Reifendruckkontrolleinrichtung gespeichert werden:
- Warnschwellen für eine unzureichende Stromversorgung;
- Programmparameter, die den Aufbau eines von der Reifendruckkontrolleinrichtung zu sendenden Datentelegramms festlegen;
- Programmparameter, welche die Übertragungsgeschwindigkeit des ersten Senders festlegen;
- Programmparameter, welche die Modulationsart des ersten Senders (8) festlegen;
- Programmparameter, welche Zeitintervalle zwischen Messvorgängen und Zeitintervalle zwischen Sendevorgängen druckabhängig und/oder geschwindigkeitsabhängig festlegen;
- Programmparameter, welche den Typ der Codierung eines von der Reifendruckkontrolleinrichtung zu sendenden Datentelegramms festlegen;
- Programmparameter, welche festlegen, welche Zustände die Reifendruckkontrolleinrichtung einnehmen darf, welche Übergänge zwischen diesen Zuständen erlaubt sind und unter welchen Bedingungen sie erfolgen;
- ein Programmparameter, welcher die Frequenz festlegt, auf welcher der erste Sender sendet.

Ein erfindungsgemäßes Verfahren lässt sich dahingehend weiterbilden, dass Programmparameter gespeichert werden. welche die Zeitintervalle zwischen den Messvorgängen und/oder zwischen den Sendevorgängen abhängig vom Reifendruck und/oder abhängig von der Reifendruck-Abfallgeschwindigkeit und/oder abhängig von der Fahrzeuggeschwindigkeit, festlegen.

Ein erfindungsgemäßes Verfahren lässt sich dahingehend weiterbilden, dass als Programmparameter bereits in der Basisversion des Programms eine Kennung im Speicher einer ersten Reifendruckkontrolleinrichtung gespeichert wird, welche die erste Reifendruckkontrolleinrichtung individualisiert, und dass diese Kennung nachträglich mit der Kennung einer zweiten Reifendruckkontrolleinrichtung überschrieben wird, welche an einer gleichbleibenden Radposition des Fahrzeugs durch die erste Reifendruckkontrolleinrichtung ersetzt wird.

Ein erfindungsgemäßes Verfahren lässt sich dahingehend weiterbilden, dass die übertragenen Programmparameter gegen eine Veränderung gesichert werden.

Ein weiterer Gegenstand der vorliegenden Erfindung ist ein System aus einer oder mehreren Reifendruckkontrolleinrichtungen, welche zum Anbringen an ein Rad eines mit Luftreifen versehenen Fahrzeugs eingerichtet sind, und eine Einrichtung zum Messen des im Luftreifen herrschenden Luftdrucks (Reifendruck) oder einer Änderung des Reifendrucks, ggf. noch eine oder mehrere Einrichtungen zum Messen anderer Messgrößen als den Reifendruck, eine elektrische oder elektronische Schaltung, von welcher wenigstens ein Teil digital arbeitet, zum Steuern der Reifen. Reifendruckkontrolleinrichtung und ggf. zum Verarbeiten der von den Messeinrichtungen gelieferten Messwerte, einen Speicher, in welchem ein Programm für die Schaltung gespeichert ist, eine elektrische Stromquelle für die Stromversorgung der Reifendruckkontrolleinrichtungen, einen in einem ersten Frequenzbereich arbeitenden, ersten Sender zum Übertragen von Daten aus der Reifendruckkontrolleinrichtung an einen außerhalb der Reifendruckkontrolleinrichtung liegenden ersten Empfänger haben, und aus einem digital arbeitenden Übertragungsgerät, in welchem unter mehreren Adressen, welche auswählbaren Fahrzeugtypen entsprechen; jeweils ein Satz von Programmparametern abgelegt ist, der dazu bestimmt ist, nach Auswahl eines solchen Satzes, der für einen ausgewählten Fahrzeugtyp spezifisch ist, in den Speicher der Reifendruckkontrolleinrichtung übertragen zu werden, um durch Einfügen der ausgewählten Programmparameter in ein in der Reifendruckkontrolleinrichtung bereits gespeichertes Basisprogramm dieses in eine für den ausgewählten Fahrzeugtyp geeignete Vollversion des Programms zu überführen, mit welcher die Reifendruckkontrolleinrichtung den Reifendruck eines Rades an eben diesem ausgewählten Fahrzeugtyp kontrollieren kann.

Ein erfindungsgemäßes System lässt sich dahingehend weiterbilden, dass in dem System die Sätze von Programmparametern in dem Übertragungsgerät in Form eines Pulldown Menüs vorliegen.

Ein erfindungsgemäßes System lässt sich dahingehend weiterbilden, dass ein zweiter Empfänger, welcher dazu eingerichtet ist Daten von einem außerhalb der Reifendruckkontrolleinrichtung liegenden, in einem zweiten Frequenzbereich arbeitenden zweiten Sender zu empfangen, in der Reifendruckkontrolleinrichtung vorgesehen ist, und dass das Übertragungsgerät den in dem zweiten Frequenzbereich sendenden zweiten Sender aufweist.

Ein erfindungsgemäßes System lässt sich dahingehend weiterbilden, dass das Übertragungsgerät ein Mobiltelefon ist oder enthält, insbesondere ein Smartphone.

Ein erfindungsgemäßes System lässt sich dahingehend weiterbilden, dass das Mobiltelefon eine Schnittstelle für die Ausgabe von Daten hat, zu denen die zu übertragenden Programmparameter gehören, und dass an diese Schnittstelle eine Baugruppe anschließbar ist, welche Bestandteil des Systems ist und den in dem zweiten Frequenzbereich arbeitenden Sender sowie eine Steuerschaltung enthält, welche über die Schnittstelle ausgegebene Programmparameter empfängt und den Sender so steuert, dass er die Programmparameter an den zweiten Empfänger überträgt.

Ein erfindungsgemäßes System lässt sich dahingehend weiterbilden, dass ein erster Speicher der Reifendruckkontrolleinrichtung zusammen mit der Einrichtung zum Messen des Reifendrucks in einen integrierten Schaltkreis integriert ist, dass in der Reifendruckkontrolleinrichtung außerdem ein gesonderter Zusatzspeicher vorgesehen ist, wobei der erste Speicher und der Zusatzspeicher zusammengenommen den Speicher der Reifendruckkontrolleinrichtung bilden, dass zwischen dem ersten Speicher im integrierten Schaltkreis und dem Zusatzspeicher eine Leitungsverbindung besteht, über welche eine Kommunikation zwischen dem ersten Speicher und dem Zusatzspeicher möglich ist, und dass die Basisversion des Programms teils im ersten Speicher des integrierten Schaltkreises und teils im Zusatzspeicher gespeichert ist.

Ein erfindungsgemäßes System lässt sich dahingehend weiterbilden, dass der Zusatzspeicher ein EPROM ist.

Ein erfindungsgemäßes Verfahren lässt sich dahingehend weiterbilden, dass es in einem System nach den voranstehenden Absätzen durchgeführt wird, wobei die Kommunikation zwischen dem ersten Speicher im integrierten Schaltkreis und dem Zusatzspeicher verschlüsselt erfolgt.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine Ausführungsform eines erfindungsgemäßen Verfahrens an einem Fahrzeug,
- Fig. 2: eine Ausführungsform eines erfindungsgemäßen Verfahrens an einem Fahrzeug,
- Fig. 3: eine Möglichkeit eines Auswahlschrittes,
- Fig. 4: eine weitere Möglichkeit eines Auswahlschrittes,
- Fig. 5: eine weitere Möglichkeit eines Auswahlschrittes,
- Fig. 6: eine mögliche Ausführungsform eines Reifendrucksensors für ein erfindungsgemäßes Verfahren und
- Fig. 7: eine Blockdarstellung eines erfindungsgemäßen Systems..

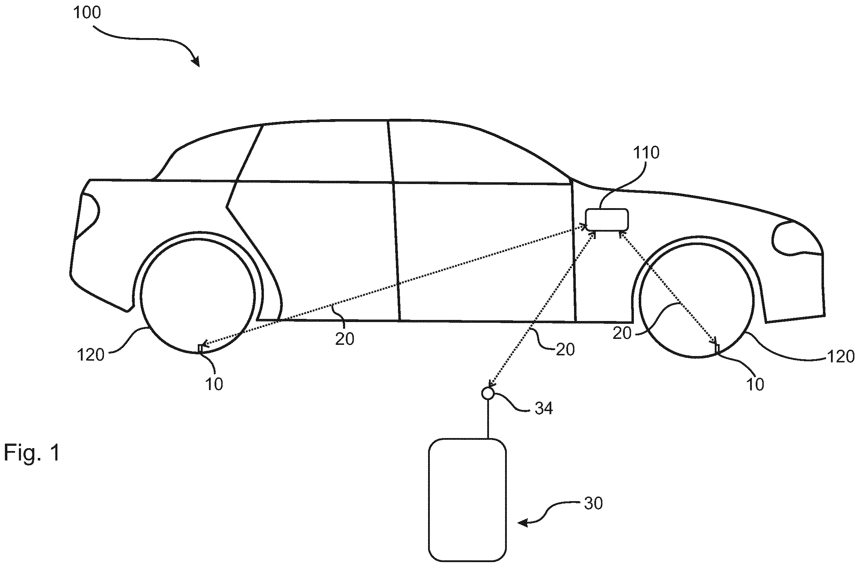

In Fig. 1 ist schematisch ein Fahrzeug 100 mit insgesamt vier Rädern 120 dargestellt, wobei die zwei Räder 120 von der rechten Seite zu erkennen sind. Das Fahrzeug 100 ist mit einem Steuergerät 110 ausgestattet, welches für eine Datenkommunikation über eine Datenkommunikationsverbindung 20 mit den Reifendrucksensoren 10 der Räder 120 ausgestattet ist. Um ein erfindungsgemäßes Verfahren durchzuführen, wird nun mithilfe einer Mobilfunkvorrichtung 30, hier mithilfe eines Mobiltelefons, über eine entsprechende Funkschnittstelle 34 eine Datenkommunikationsverbindung 20 mit dem Steuergerät 110 hergestellt. Damit besteht nun eine indirekte Datenkommunikationsverbindung 20 zwischen der Mobilfunkvorrichtung 30 und einem bzw insbesondere in gleichzeitigerweise allen Reifendrucksensoren 10. Anschließend wird das Verfahren dahingehend durchgeführt, dass ein für dieses Fahrzeug 100 spezifischer Sensorparameter oder eine entsprechende spezifische Sensorparametergruppe ausgewählt und für diese Reifendrucksensoren aktiviert wird. Die Aktivierung erfolgt dabei insbesondere durch eine Übermittlung aus einem Speicher der Mobilfunkvorrichtung 30 über die Datenkommunikationsverbindung 20 in die Reifendrucksensoren 10. Alternativ ist auch eine Aktivierung in Form des Setzens eines Tags innerhalb einer Speichervorrichtung der Reifendrucksensoren 10 denkbar.

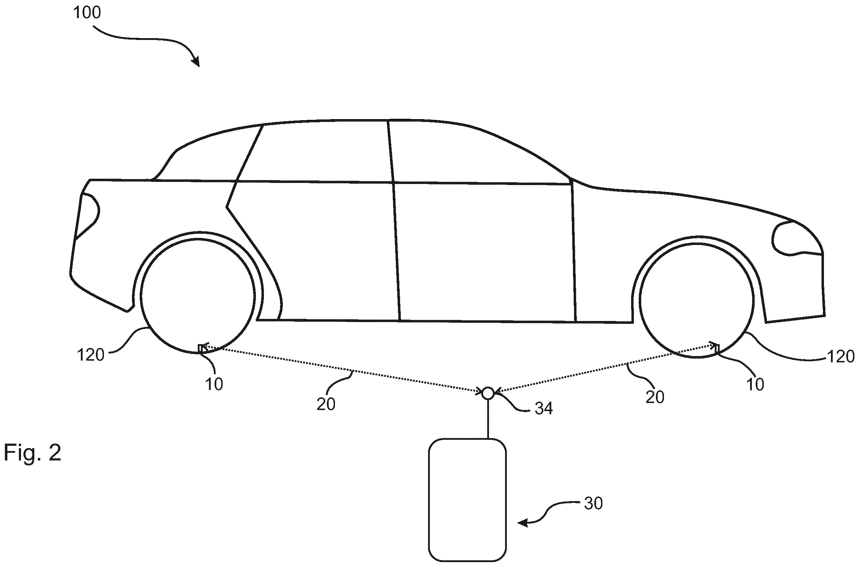

Fig. 2 zeigt eine Abwandlung des Verfahrens der Fig. 1. Hier kann auf ein Steuergerät 110 im Fahrzeug 100 verzichtet werden. Vielmehr kann in direkter Kommunikation die jeweilige Datenkommunikationsverbindung 20, vorzugsweise ebenfalls in paralleler Weise, zwischen der Mobilfunkvorrichtung 30 und einem bzw. allen Reifendrucksensoren 10 hergestellt werden. Die weiteren Verfahrensschritte laufen ab, wie sie mit Bezug auf Fig. 1 erläutert worden sind.

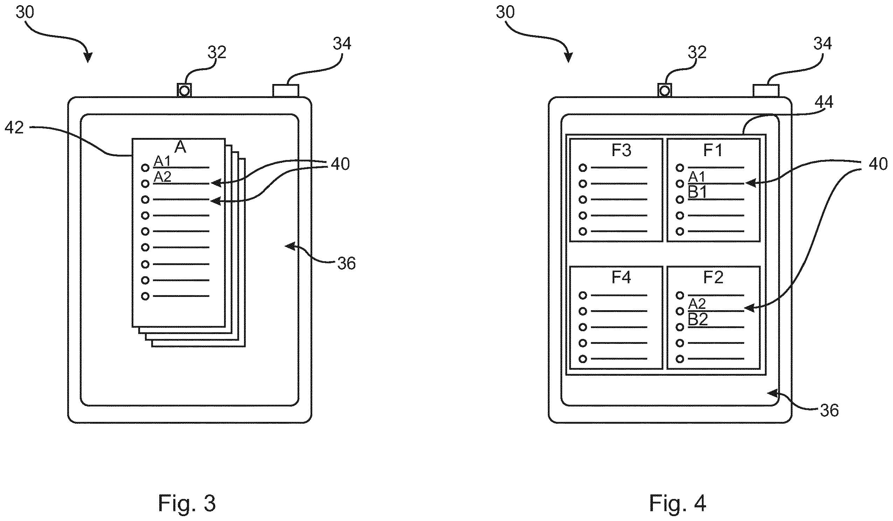

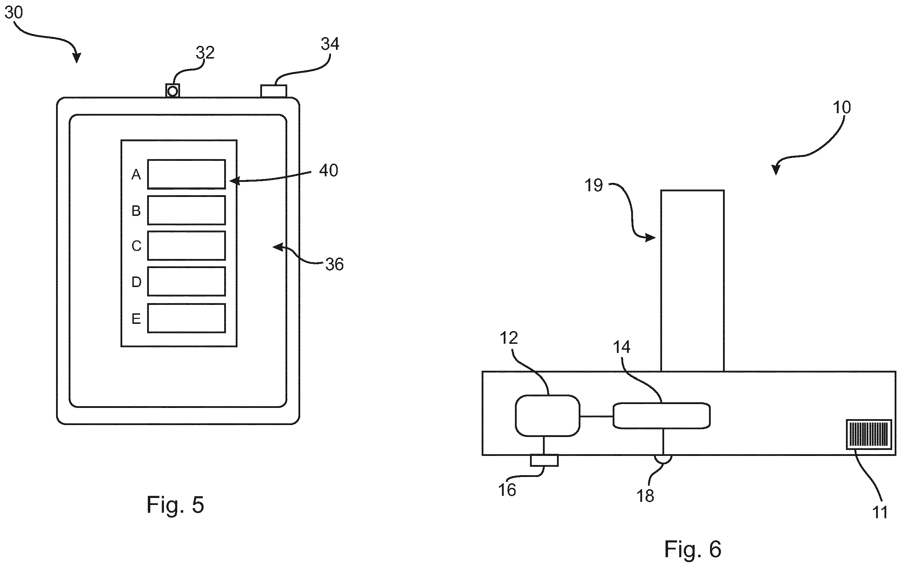

In Fig. 3 ist eine Möglichkeit dargestellt, wie auf einer Mobilfunkvorrichtung 30, hier in Form eines Tablet-PCs bzw. eines Mobiltelefons, der Auswahlschritt durchgeführt werden kann. So ist auf einem Display 36 als Anzeigevorrichtung der Mobilfunkvorrichtung 30 insbesondere mit Touch-Funktionalität, hier eine Datenbank 42 mit einer Vielzahl möglicher Sensorparameter dargestellt. Für den ersten Sensorparameter sind also hier zwei unterschiedliche Werte A1 und A2 für den Sensorparameter A angegeben. Diese können nun ausgewählt werden und anschließend über die Datenkommunikationsverbindung 20 dem jeweiligen Reifendrucksensor 10 zugewiesen werden. Neben der Funkschnittstelle 34 weist diese Ausführungsform der Mobilfunkvorrichtung 30 zusätzlich eine Scanvorrichtung 32, in Form einer Kamera, auf. Diese Scanvorrichtung 32 ist in der Lage, eine Codierung 11 zu erkennen, wie sie z. B. die Fig. 6 zeigt. Damit ist in einfacher und vor allem schneller Weise die Kopplung für die Datenkommunikationsvorrichtung 20 möglich.

Fig. 4 zeigt schematisch eine alternative Ausführung eines Auswahlschrittes. So wird hier auf dem Display 36 der Mobilfunkvorrichtung 30 eine Fahrzeug-Datenbank 44 angezeigt. Für eine Vielzahl unterschiedlicher Fahrzeugtypen F1 bis F4 ist hier jeweils eine Gruppe einzelner Sensorparameter mit den entsprechenden direkten Werte A1, B1, A2 und B2 für die Sensorparameter dargestellt. Der Benutzer muss nun für den Auswahlschritt nur noch die Gruppe der Sensorparameter unter Verwendung der Information des jeweiligen Fahrzeugtypens F1 bis F4 auswählen, um diesen Auswahlschritt der Konfiguration schnell und vor allem sicher durchzuführen.

Fig. 5 zeigt eine Möglichkeit einer im Wesentlichen freien Konfigurierung der Sensorparameter A bis E, welche hier mit Eingabefeldern für die freie Eingabe von Werten versehen sind. Diese drei Möglichkeiten der Fig. 3 bis 5 können selbstverständlich parallel angeboten werden oder auch miteinander kombinierbar sein.

Ein erfindungsgemäßes Verfahren wird insbesondere für einen Reifendrucksensor 10 durchgeführt, wie er bspw. in der Fig. 6 dargestellt ist. Hier ist bereits eine Kombination mit einem Ventil 19 durchgeführt. Der Reifendrucksensor 10 weist dabei zum einen das Sensorelement 18 zur Erkennung des Reifendrucks auf. Weiter ist eine Recheneinheit 14 vorgesehen, welche mit einer Speichereinheit 12 in datenkommunizierender Verbindung steht. Mithilfe einer Funkschnittstelle 16 kann die Datenkommunikationsverbindung 20 hergestellt werden. In der Speichereinheit 12 können bereits vorausgewählte bzw. vorauswählbare Sensorparameter gespeichert sein. Auch ist es möglich, dass für die Aktivierung der spezifischen Sensorparameter nach einer Übertragung über die Datenkommunikationsverbindung 20 die Speicherung in dieser Speichereinheit 12 diese Aktivierung darstellt oder zumindest teilweise darstellt.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

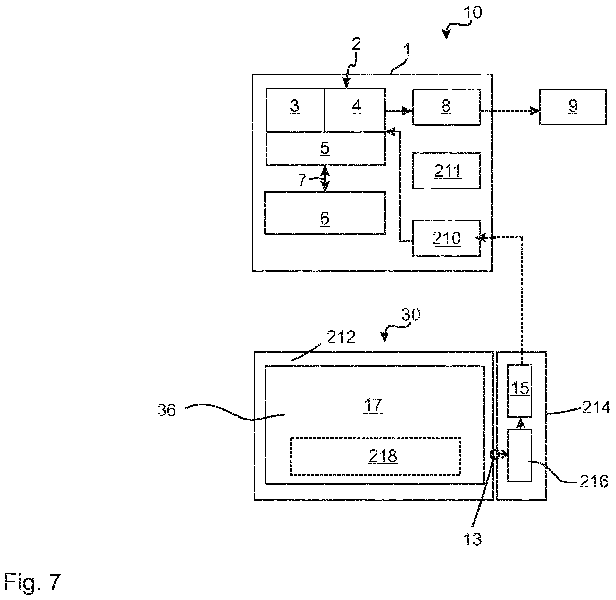

Das System gemäß der Fig. 7 umfasst mindestens eine Reifendruckkontrolleinrichtung 1 mit einem integrierten Schaltkreis 2, in welchem u. a. ein Drucksensor 3 zur Messung des Reifendrucks, eine Steuer- und Auswerteschaltung 4 und ein erster Speicher 5 ausgebildet sind. Neben dem integrierten Schaltkreis 2 gibt es in der Reifendruckkontrolleinrichtung 1 einen Zusatzspeicher 6, z. B. ein EPROM. Der Zusatzspeicher 6 hat eine Leitungsverbindung 7 mit dem integrierten Schaltkreis 2. Der Datenverkehr zwischen dem integrierten Schaltkreis 2 und dem Zusatzspeicher 6 erfolgt verschlüsselt.

Der integrierte Schaltkreis 2 steuert einen ersten Sender 8, welcher z. B .auf der für Reifendruckkontrollsysteme vorgesehenen Frequenz von 433 MHz sendet. Der Sender überträgt Daten, insbesondere den Reifendruck oder davon abgeleitete Größen, eine Kennung und ggf. weitere ihm vom integrierten Schaltkreis 2 zur Verfügung gestellte Daten per Funk an einen außerhalb der Reifendruckkontrolleinrichtung 1 vorgesehenen Empfänger 9, welcher sich an geeigneter Stelle in einem Fahrzeug oder an der Unterseite eines Fahrzeugs befindet, an welchem ein Rad montiert ist, welches mit der Reifendruckkontrolleinrichtung 1 ausgestattet ist. Ein zweiter Empfänger 210 ist in der Reifendruckkontrolleinrichtung 1 vorgesehen; er soll auf einer Frequenz empfangen, die von der Frequenz, mit welcher der erste Sender 8 sendet, verschieden ist, insbesondere niedriger ist als die Frequenz des Senders 8. Besonders bevorzugt ist es, wenn der zweite Empfänger auf eine Frequenz von 125 KHz abgestimmt ist. Eine Batterie 211 versorgt die Bestandteile der Reifendruckkontrolleinrichtung 1 mit der für ihren Betrieb nötigen elektrischen Energie.

In den Speichern 5 und 6 der Reifendruckkontrolleinrichtung 1 befindet sich ab Werk eine Basissoftware, die durch Übertragung von wenigen Programmparametern im Umfang von nicht mehr als 20 bis 30 Byte zu einer für eine bestimmte Fahrzeugtype passenden Vollversion einer Betriebssoftware für die Reifendruckkontrolleinrichtung 1 ergänzt oder durch Überschreiben von voreingestellten Programmparametern geändert werden kann. Um diese wenigen Programmparameter in die Reifendruckkontrolleinrichtung 1 zu übertragen, ist z. B. ein Smartphone 212 vorgesehen, welches eine leitungsgebundene Schnittstelle 13 hat, über welche digitale Daten ausgegeben werden können. An diese Schnittstelle 13 kann ein Modul 214 angedockt werden, welches einen zweiten Sender 15 hat, dessen Sendefrequenz auf die Frequenz des in der Reifendruckkontrolleinrichtung 1 vorgesehenen zweiten Empfängers 210 abgestimmt ist. Ferner ist in dem Modul 214 eine Steuerschaltung 216 vorgesehen, z. B. ein Microcontroller, welche über die Schnittstelle 13 Daten erhält, die sie mittels des von ihr gesteuerten zweiten Senders 15 in die Reifendruckkontrolleinrichtung 1 überträgt. Diese Daten enthalten Programmparameter, die mit einer softwaremäßig auf dem Display 17 des Smartphones 212 dargestellten Tastatur 218 ausgewählt und aus einem im Smartphone 212 oder in dem Modul 214, z.B. im Microcontroller 216, vorgesehenen Speicher abgerufen oder eingegeben werden können, um die in der Reifendruckkontrolleinrichtung 1 bereits gespeicherte Basissoftware zu einer für den gewünschten Fahrzeugtyp vorgesehenen Vollversion der Betriebssoftware für die Reifendruckkontrolleinrichtung 1 zu ergänzen.

Das Smartphone 212 kann außerdem dafür genutzt werden, um mit ihm Daten aus der Reifendruckkontrolleinrichtung 1 abzufragen, z. B. den aktuellen Reifendruck.

### Bezugszeichenliste

- 1: Reifendruckkontrolleinrichtung
- 2: integrierter Schaltkreis
- 3: Drucksensor
- 4: Steuer- und Auswerteschaltung
- 5: erster Speicher
- 6: Zusatzspeicher
- 7: Leitungsverbindung
- 8: erster Sender
- 9: erster Empfänger
- 210: zweiter Empfänger
- 211: Batterie, Stromquelle
- 212: Smartphone, Mobiltelefon
- 13: leitungsgebundene Schnittstelle
- 214: Modul, Baugruppe
- 15: zweiter Sender
- 216: Steuerschaltung
- 17: Display
- 218: Tastatur

- 10: Reifendrucksensor
- 11: Codierung
- 12: Speichereinheit
- 14: Recheneinheit
- 16: Funkschnittstelle
- 18: Sensorelement
- 19: Ventil
- 20: Datenkommunikationsverbindung
- 30: Mobilfunkvorrichtung
- 32: Scanvorrichtung
- 34: Funkschnittstelle
- 36: Display
- 40: Sensorparameter
- 42: Datenbank
- 44: Fahrzeug-Datenbank

- 100: Fahrzeug
- 110: Steuergerät
- 120: Rad

- A: erster Sensorparameter
- An: Werte für den ersten Sensorparameter
- B: zweiter Sensorparameter
- Bn: Werte für den zweiten Sensorparameter
- C - E: weitere Sensorparameter
- Fn: Fahrzeugtyp

## Patentansprüche

1. Verfahren für die Konfigurierung eines Reifendrucksensors (10) auf ein Fahrzeug (100), aufweisend die folgenden Schritte:
- Herstellen einer Datenkommunikationsverbindung (20) zwischen einer Mobilfunkvorrichtung (30) und dem Reifendrucksensor (10),
- Auswählen wenigstens eines für das Fahrzeug (100) spezifischen Sensorparameters (40) mittels der Mobilfunkvorrichtung (30),
- Aktivieren des wenigstens einen ausgewählten Sensorparameters (40) im Reifendrucksensor (10),
welche Mobilfunkvorrichtung (30) gerade keine spezifische Programmiervorrichtung für den Reifendrucksensor darstellt.

2. Verfahren nach Anspruch 1,
**dadurch gekennzeichnet, dass**
die Datenkommunikationsverbindung (20) als kabellose Verbindung, insbesondere auf Basis wenigstens einer der folgenden Funkstandards, aufgebaut wird:
- WLAN
- Bluetooth
- NFC (Near Field Communication)
- LF-Kommunikation

3. Verfahren nach einem der vorangegangenen Ansprüche,
**dadurch gekennzeichnet, dass**
die Datenkommunikationsverbindung (20) in direkter Weise mit dem Reifendrucksensor (10) hergestellt wird.

4. Verfahren nach einem der vorangegangenen Ansprüche,
**dadurch gekennzeichnet, dass**
die Datenkommunikationsverbindung (20) in indirekter Weise über ein Steuergerät (110) des Fahrzeugs (100) hergestellt wird.

5. Verfahren nach einem der vorangegangenen Ansprüche,
**dadurch gekennzeichnet, dass**
die Auswahl des wenigstens einen für das Fahrzeug (100) spezifischen Sensorparameters (40) aus einer Speichereinheit (12) des Reifendrucksensors (10), insbesondere aus vordefinierten Sensorparametern (40) erfolgt.

6. Verfahren nach einem der vorangegangenen Ansprüche,
**dadurch gekennzeichnet, dass**
die Auswahl des wenigstens einen für das Fahrzeug (100) spezifischen Sensorparameters (40) aus einer Datenbank (42) erfolgt, in welcher der jeweilige spezifische Sensorparameter (40), insbesondere in Korrelation zu dem jeweiligen Fahrzeug (100) gespeichert ist.

7. Verfahren nach einem der vorangegangenen Ansprüche,
**dadurch gekennzeichnet, dass**
die Auswahl von wenigstens zwei für das Fahrzeug (100) spezifischen Sensorparametern (40) gemeinsam erfolgt über eine Auswahl des Fahrzeugs (100), insbesondere aus einer Fahrzeug-Datenbank (44).

8. Verfahren nach einem der vorangegangenen Ansprüche,
**dadurch gekennzeichnet, dass**
die Verfahrensschritte des Herstellens der Datenkommunikationsverbindung (20), der Auswahl des wenigstens einen Sensorparameters (40) und der Aktivierung des wenigstens einen ausgewählten Sensorparameters (40) nach der Montage des Reifendrucksensors (10) auf einer Reifenfelge erfolgt.

9. Verfahren nach einem der vorangegangenen Ansprüche,
**dadurch gekennzeichnet, dass**
die Datenkommunikationsverbindung (20) zwischen der Mobilfunkvorrichtung (30) und wenigstens zwei Reifendrucksensoren (10) unterschiedlicher Räder (120) eines Fahrzeugs (100), insbesondere mit allen Reifendrucksensoren (10) aller Räder (120) des Fahrzeugs (10), hergestellt wird für eine gemeinsame Konfiguration dieser Reifendrucksensoren (10).

10. Verfahren nach einem der vorangegangenen Ansprüche,
**dadurch gekennzeichnet, dass**
ein Reifendrucksensor (10) für dieses Verfahren durch Scannen einer Codierung (11), insbesondere mittels einer Scanvorrichtung (32) der Mobilfunkvorrichtung (30), ausgewählt wird.

11. Verfahren nach einem der vorangegangenen Ansprüche,
**dadurch gekennzeichnet, dass**
die Datenkommunikationsverbindung (20) zwischen einer LF-Schnittstelle der Mobilfunkvorrichtung (30) und einer LF-Gegenschnittstelle des Reifendrucksensors (10) ausgebildet wird, wobei die Datenkommunikationsverbindung (20) insbesondere in einem Frequenzbereich zwischen 100kHz und 140kHz, vorzugsweise in einem Frequenzbereich zwischen 120kHz und 135kHz ausgeführt wird.

12. Computerprogramprodukt zur Ausführung auf einer Mobilfunkvorrichtung (30) und gespeichert auf einem computerlesbaren Medium, aufweisend:
- Computerlesbare Programmmittel, welche die Recheneinheit veranlassen eine Datenkommunikationsverbindung (20) zwischen einer Mobilfunkvorrichtung (30) und dem Reifendrucksensor (10) herzustellen,
- Computerlesbare Programmmittel, welche die Recheneinheit veranlassen wenigstens einen für das Fahrzeug (100) spezifischen Sensorparameter (40) mittels der Mobilfunkvorrichtung (30) auszuwählen,
- Computerlesbare Programmmittel, welche die Recheneinheit veranlassen den wenigstens einen ausgewählten Sensorparameter (40) im Reifendrucksensor (10) zu aktivieren.

13. Computerprogramprodukt nach Anspruch 12,
**dadurch gekennzeichnet, dass**
computerlesbare Programmmittel vorgesehen sind für die Ausführung der Schritte eines Verfahrens mit den Merkmalen eines der Ansprüche 1 bis 11.

## Claims

1. Method for the configuration of a tyre pressure sensor (10) for a vehicle (100), comprising the following steps:
- production of a data communication connection (20) between a mobile radio device (30) and a tyre pressure sensor (10),
- selection of at least one specific sensor parameter (40) for the vehicle (100) via a mobile radio device (30),
- activation of the at least one selected sensor parameter (40) in the tyre pressure senor (10), the mobile radio device (30) not representing a programming device for the tyre pressure sensor.

2. Method according to claim 1,
**characterised in that**
the data communication connection (20) is established as a wireless connection, particularly on basis of at least one of the following radio standards:
- WLAN
- Bluetooth
- NFC (near field communication)
- LF-Communication

3. Method according to one of the preceding claims,
**characterised in that**
the data communication connection (20) is established in a direct manner with the tyre pressure sensor (10).

4. Method according to one of the preceding claims,
**characterised in that**
the data communication connection (20) is established in an indirect manner via a control device (110) of the vehicle (100).

5. Method according to one of the preceding claims,
**characterised in that**
the selection of at least one sensor parameter (40) specific for the vehicle (100) from a memory unit (12) of the tyre pressure sensor (10) occurs, particularly from predefined sensor parameters (40).

6. Method according to one of the preceding claims,
**characterised in that**
the selection of the at least one sensor parameter (40) specific for the vehicle (100) occurs from a database (42) in which the respective sensor parameter (40) is saved particularly in correlation to the respective vehicle (100).

7. Method according to one of the preceding claims,
**characterised in that**
the selection of at least two sensor parameters (40) specific for the vehicle (100) occurs commonly via a selection of the vehicle (100) particularly from a vehicle database (44).

8. Method according to one of the preceding claims,
**characterised in that**
the method steps of the establishment of the data communication connection (20), the selection of at least one sensor parameter (40) and the activation of the at least one selected sensor parameter (40) occurs after mounting of the tyre pressure sensor (10) on a wheel rim.

9. Method according to one of the preceding claims,
**characterised in that**
the data communication connection (20) between the mobile radio device (30) and at least two tyre pressure sensors (10) of different wheels (120) of a vehicle (100) is generated for a common configuration of these tyre pressure sensors (10) particularly with all tyre pressure sensors (10) of all wheels (120) of the vehicle (100).

10. Method according to one of the preceding claims,
**characterised in that**
the tyre pressure sensor (10) is selected for this method by scanning of a coding (11) particularly via a scan device (32) of the mobile radio device (30).

11. Method according to one of the preceding claims,
**characterised in that**
the data communication connection (20) is configured between the LF-Interface of the mobile radio device (30) and the LF-Counter-Interface of the tyre pressure sensors (10), wherein the data communication connection (20), is performed particularly in a frequency range between 100 kHz and 140 kHz, preferably in a frequency range between 120 kHz und 135 kHz.

12. Computer program product for a configuration of a mobile radio device (30) and saved on a machine readable medium, comprising:
- machine readable program means which cause the processing unit to generate a data communication connection (20) between a mobile radio device (30) and the tyre pressure sensor (10),
- machine readable program means which cause a processing unit to select at least one sensor parameter (40) specific for the vehicle (100) via the mobile radio device (30),
- machine readable program means which cause the processing unit to activate at least one selected sensor parameter (40) in the tyre pressure sensor (10).

13. Computer program product according to claim 12,
**characterised in that**
the machine-readable program means are provided for the configuration of the steps of the method with the features of one of claims 1 to 11.

## Revendications

1. Procédé de configuration d'un capteur de pression de pneumatique (10) sur un véhicule (100), présentant les étapes suivantes :
- établissement d'une liaison de communication de données (20) entre un dispositif de communication mobile (30) et le capteur de pression de pneumatique (10),
- sélection d'au moins un paramètre de capteur (40) spécifique au véhicule (100) au moyen du dispositif de communication mobile (30),
- activation dudit au moins un paramètre de capteur sélectionné (40) dans le capteur de pression de pneumatique (10),
lequel dispositif de communication mobile (30) ne constitue pas un dispositif de programmation spécifique pour le capteur de pression de pneumatique.

2. Procédé selon la revendication 1,
**caractérisé en ce que**
la liaison de communication de données (20) est établie sous forme de liaison sans fil, en particulier sur la base d'au moins l'une des normes de communication suivantes :
- Wi-Fi
- Bluetooth
- NFC (Near Field Communication, communication en champ proche, CCP)
- communication BF

3. Procédé selon l'une des revendications précédentes,
**caractérisé en ce que**
la liaison de communication de données (20) est établie directement avec le capteur de pression de pneumatique (10).

4. Procédé selon l'une des revendications précédentes,
**caractérisé en ce que**
la liaison de communication de données (20) est établie indirectement par l'intermédiaire d'une unité de commande (110) du véhicule (100).

5. Procédé selon l'une des revendications précédentes,
**caractérisé en ce que**
ledit au moins un paramètre de capteur (40) spécifique au véhicule (100) est sélectionné à partir d'une unité de stockage (12) du capteur de pression de pneumatique (10), en particulier à partir de paramètres de capteur prédéfinis (40).

6. Procédé selon l'une des revendications précédentes,
**caractérisé en ce que**
ledit au moins un paramètre de capteur (40) spécifique au véhicule (100) est sélectionné à partir d'une base de données (42) dans laquelle le paramètre de capteur spécifique respectif (40) est stocké, en particulier en corrélation avec le véhicule respectif (100).

7. Procédé selon l'une des revendications précédentes,
**caractérisé en ce que**
au moins deux paramètres de capteur (40) spécifiques au véhicule (100) sont sélectionnés ensemble par une sélection du véhicule (100), en particulier à partir d'une base de données de véhicules (44).

8. Procédé selon l'une des revendications précédentes,
**caractérisé en ce que**
les étapes d'établissement de la liaison de communication de données (20), de sélection dudit au moins un paramètre de capteur (40) et d'activation dudit au moins un paramètre de capteur sélectionné (40) sont effectuées après le montage du capteur de pression de pneumatique (10) sur une jante de pneumatique.

9. Procédé selon l'une des revendications précédentes,
**caractérisé en ce que**
la liaison de communication de données (20) entre le dispositif de communication mobile (30) et au moins deux capteurs de pression de pneumatique (10) de roues différentes (120) d'un véhicule (100), en particulier avec tous les capteurs de pression de pneumatique (10) de toutes les roues (120) du véhicule (10), est établie pour une configuration commune de ces capteurs de pression de pneumatique (10).

10. Procédé selon l'une des revendications précédentes,
**caractérisé en ce que**
un capteur de pression de pneumatique (10) pour ce procédé est sélectionné par scannage d'un codage (11), en particulier au moyen d'un dispositif de scannage (32) du dispositif de communication mobile (30).

11. Procédé selon l'une des revendications précédentes,
**caractérisé en ce que**
la liaison de communication de données (20) est formée entre une interface BF du dispositif de communication mobile (30) et une interface complémentaire BF du capteur de pression de pneumatique (10), la liaison de communication de données (20) étant effectuée en particulier dans une plage de fréquences comprise entre 100 kHz et 140 kHz, de préférence dans une plage de fréquences comprise entre 120 kHz et 135 kHz.

12. Programme informatique destiné à être exécuté sur un dispositif de communication mobile (30) et stocké sur un support lisible par ordinateur, présentant :
- des moyens de programme lisibles par ordinateur qui amènent l'unité de calcul à établir une liaison de communication de données (20) entre un dispositif de communication mobile (30) et le capteur de pression de pneumatique (10),
- des moyens de programme lisibles par ordinateur qui amènent l'unité de calcul à sélectionner au moins un paramètre de capteur (40) spécifique au véhicule (100) au moyen du dispositif de communication mobile (30),
- des moyens de programme lisibles par ordinateur qui amènent l'unité de calcul à activer au moins un paramètre de capteur sélectionné (40) dans le capteur de pression de pneumatique (10).

13. Programme d'ordinateur selon la revendication 12,
**caractérisé en ce que**
des moyens de programme lisibles par ordinateur sont prévus pour l'exécution des étapes d'un procédé présentant les caractéristiques de l'une des revendications 1 à 11.
